# EUROPÄISCHE PATENTANMELDUNG

(11) **EP 4 297 535 A1**
(43) Veröffentlichungstag der Anmeldung: **27.12.2023**
(21) Anmeldenummer: 22180442.0
(22) Anmeldetag: 22.06.2022
(51) Int. Cl.: H05B 47/105, B60Q 1/14

(54) **VERFAHREN UND STEUERVORRICHTUNG ZUR AUTOMATISCHEN STEUERUNG WENIGSTENS EINER LICHTFUNKTION EINER BELEUCHTUNGSEINRICHTUNG EINES EGO-FAHRZEUGS**

(71) Anmelder: Volkswagen Aktiengesellschaft, 38440 Wolfsburg (DE)
(72) Erfinder: Lampe, Sebastian, 49205 Hasbergen (DE); Studeny, Christian, 38170 Schöppenstedt (Eitzum) (DE); Bussius, Annika, 38446 Wolfsburg (DE); Danov, Roman, 30171 Hannover (DE); Günther, Dr. Bert, 13589 Berlin (DE); Gutjahr, Karl-Wilhelm, 10781 Berlin (DE); Petermann-Stock, Dr. Ina, 38448 Wolfsburg (DE); Roth, Dr. Joscha, 30177 Hannover (DE); Thamm, Mathias, 39646 Oebisfelde (DE); Vogler, Sebastian, 38448 Wolfsburg (DE); Weng, Michael, 10559 Berlin (DE)

(57) **Zusammenfassung**

Verfahren zur automatischen Steuerung wenigstens einer Lichtfunktion einer Beleuchtungseinrichtung (20), insbesondere eines Tagfahrlichts und/oder eines Schlusslichts und/oder eines Abblendlichts, eines Ego-Fahrzeugs (10) in Abhängigkeit eines Sichtverhältnisses, wobei Umfelddaten, welche für ein Sichtverhältnis in dem Umfeld des Ego-Fahrzeugs (10) charakteristisch sind, erfasst werden. Erfindungsgemäß wird auf Grundlage der erfassten Umfelddaten wenigstens eine Sichtbarkeitsgröße, welche für eine Sichtbarkeit des Ego-Fahrzeugs (10) für wenigstens einen weiteren Verkehrsteilnehmer (40) charakteristisch ist, zur Steuerung der wenigstens einen Lichtfunktion der Beleuchtungseinrichtung (20) des Ego-Fahrzeugs (10) ermittelt.

## Beschreibung

Die vorliegende Erfindung bezieht sich auf ein Verfahren sowie eine Steuervorrichtung für eine Beleuchtungseinrichtung, wie beispielsweise ein Tagfahrlicht, ein Schlusslicht und/oder ein Abblendlicht, eines Ego-Fahrzeugs zur automatischen Steuerung wenigstens einer Lichtfunktion der Beleuchtungseinrichtung. Die vorliegende Erfindung bezieht sich weiterhin auf ein Verfahren zur Erzeugung eines trainierten Sichtbarkeits-Modells maschinellen Lernens zur Ermittlung wenigstens einer Sichtbarkeitsgröße, welches Modell und/oder welche ermittelte Sichtbarkeitsgröße zur Verwendung zur automatischen Steuerung wenigstens einer Lichtfunktion einer Beleuchtungseinrichtung eines Ego-Fahrzeugs geeignet und bestimmt ist.

Aus dem Stand der Technik sind automatische Fahrtlichtschaltungen (Abblend- und Schlusslicht) entsprechend einem Regen-/Licht-Sensor bekannt.

So ist bekannt, dass die automatische Steuerung des Lichts über den Regen-/Licht- Sensor erfolgt, entsprechend der aktuellen Beleuchtungsstärke oder über die Wischgeschwindigkeit und Einschaltdauer der Scheibenwischer, das Abblendlicht und damit auch das Schlusslicht einschaltet. Diese Steuerung ist so ausgelegt, dass möglichst immer dafür gesorgt ist, dass das Sichtfeld des Fahrers in der Dämmerung und Dunkelheit hinreichend ausgeleuchtet ist und das Fahrzeug von anderen Verkehrsteilnehmern wahrgenommen wird.

Aus der DE 10 2016 223 232 A1 ist ein Kraftfahrzeug mit automatischer Fahrlichtsteuerung bekannt. Darin ist beschrieben, dass die Steuereinrichtung derart ausgestaltet ist, dass sie auf Sensordaten eines kamerabasierten Wettersensors des Kraftfahrzeugs zugreift und ein Anschalten des Fahrlichts auslöst, wenn die Sensordaten ein Schlechtwetterkriterium erfüllen. Weiter wird bei aktivierter Fahrlichtautomatik ein Abschalten des Fahrlichts ausgelöst, sofern ein Helligkeitskriterium nicht erfüllt ist und sich das Kraftfahrzeug gemäß einer digitalen Karte nicht in einem dunklen Bereich befindet.

Der vorliegenden Erfindung liegt daher die Aufgabe zugrunde, die aus dem Stand der Technik bekannten Nachteile zu überwinden und ein Verfahren sowie eine Steuervorrichtung zur, insbesondere automatischen, Steuerung wenigstens einer Lichtfunktion einer Beleuchtungseinrichtung eines Fahrzeugs bereitzustellen, welche eine möglichst gute Beleuchtung des Fahrzeugs zur Gewährleistung einer möglichst hohen Verkehrssicherheit, insbesondere für weitere Verkehrsteilnehmer, bei gleichzeitiger möglichst energieeffizienter Betriebsweise der Beleuchtungseinrichtung bietet.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Bei einem erfindungsgemäßen Verfahren zur, insbesondere automatischen, Steuerung wenigstens einer Lichtfunktion einer Beleuchtungseinrichtung, insbesondere eines Tagfahrlichts und/oder eines Schlusslichts und/oder eines Abblendlichts, eines Ego-Fahrzeugs (insbesondere in Abhängigkeit eines Sichtverhältnisses), werden Umfelddaten, welche für ein Sichtverhältnis (insbesondere in Bezug auf das Ego-Fahrzeug) insbesondere in einem (bzw. dem) Umfeld des Ego-Fahrzeugs (nachfolgend auch als Fahrzeugumfeld bezeichnet) charakteristisch sind, erfasst.

Unter dem "Erfassen von Umfelddaten" kann dabei insbesondere ein (insbesondere Computer-implementiertes) Abrufen von Umfelddaten (etwa von einer, insbesondere fahrzeuginternen oder externen, Speichereinrichtung) und/oder ein Ermitteln, insbesondere ein Berechnen, der Umfelddaten und/oder ein Erzeugen der Umfelddaten und/oder ein Aufnehmen der Umfelddaten (beispielsweise mittels einer (physischen) Sensoreinrichtung (insbesondere zur Erfassung des Fahrzeugumfelds), so dass die Umfelddaten etwa als Messdaten aufgenommen werden können) zu verstehen sein. Das Abrufen von Umfelddaten kann beispielsweise mittels einer insbesondere Prozessor-basierten Steuervorrichtung durchgeführt werden, bei welcher es sich bevorzugt um die nachfolgend näher (auch unabhängig) beschriebene Steuervorrichtung handelt.

Unter Sichtverhältnis ist insbesondere ein Grad bzw. ein Maß zu verstehen, wie gut man sehen kann und/oder wie gut man gesehen werden kann. So ist beispielsweise unter Sichtverhältnis zu verstehen, wie gut das Ego-Fahrzeug durch wenigstens einen weiteren Verkehrsteilnehmer (etwa einen Nutzer eines Umfeld-Fahrzeugs) und/oder durch wenigstens eine Sensoreinrichtung (welche etwa in dem Fahrzeugumfeld des Ego-Fahrzeugs angeordnet ist, beispielsweise an dem Umfeld-Fahrzeug insbesondere in fahrzeuggebundener Form) visuell bzw. optisch wahrnehmbar ist.

Denkbar ist auch, dass unter Sichtverhältnis (zusätzlich oder alternativ) zu verstehen ist, wie gut und/oder welchen (geometrischen) Bereich des Fahrzeugumfelds ein Nutzer des Ego-Fahrzeugs das Fahrzeugumfeld und/oder ein Objekt aus dem Fahrzeugumfeld sehen bzw. visuell wahrnehmen kann, also in welchem Maß der jeweilige Bereich (durch die Beleuchtungseinrichtung des Fahrzeugs ausgeleuchtet ist). Das Sichtverhältnis könnte beispielsweise durch die Angabe einer einsehbaren und/oder entsprechend vorgegebenen Maßstäben ausreichend gut ausgeleuchteten Strecke (etwa eine einsehbare Streckenlänge) und/oder einen einsehbaren Bereich des Fahrzeugumfelds des Ego-Fahrzeugs charakterisiert sein. Beispielsweise könnte das Sichtverhältnis charakterisiert sein dadurch, ob ein Nutzer des Ego-Fahrzeugs, wie ein Fahrer, noch ausreichend (das Fahrzeugumfeld) sieht und/oder ob das Ego-Fahrzeug (insbesondere von vorne, etwa über die Beleuchtungseinrichtung des Ego-Fahrzeugs wie (beispielsweise allein über) das Tagfahrlicht) noch ausreichend gesehen wird und/oder visuell/optisch wahrnehmbar ist.

Insbesondere kann üblicherweise das Sichtverhältnis beeinflusst sein durch eine oder mehrere Lichtbedingung(-en) und/oder Umgebungsbedingung(-en) und/oder Sichtbedingung(-en).

Unter Umgebungsbedingung kann dabei eine Umgebungshelligkeit (z.B. Dunkelheit), eine Witterungsbedingung, etwa sichtbehindernde Wettereinflüsse (wie Wasser-, Schnee- und Staub-/Sand-Verwirbelungen und/oder Nebel), und dergleichen und Kombinationen hiervon zu verstehen sein.

Unter einer Lichtbedingung kann beispielsweise eine durch eine Beleuchtungssituation, welche charakteristisch ist für eine Auswirkung (etwa Einschränkung oder Verbesserung) dieser auf die Sicht, wie beispielsweise eine Blendung (etwa bei tiefstehender Sonne oder durch eine Lichtquelle wie einen Scheinwerfer eines entgegenkommenden Fahrzeugs), Farbe und Lichtabsorptions- und/oder Lichtreflexions- und/oder Lichtstreuungseigenschaften (wie beispielsweise lichtreflektierende, etwa reflektierende Farb- und/oder Effektpigmente in einem Lack des Ego-Fahrzeugs, und/oder lichtstreuende und/oder lichtabsorbierende Eigenschaften des wahrzunehmenden Objekts, etwa des Ego-Fahrzeugs) und dergleichen sowie Kombinationen hiervon zu verstehen sein.

Unter einer Sichtbedingung kann beispielsweise ein Kontrastverhältnis des visuell wahrzunehmenden Objekts (etwa des Ego-Fahrzeugs) im Vergleich zum Objektumfeld (etwa Fahrzeugumfeld des Ego-Fahrzeugs) zu verstehen sein. Der Kontrast kann dabei durch die geometrische Ausdehnung (beispielsweise Länge und/oder Breite und/oder Höhe) des Ego-Fahrzeugs und/oder Farbe und/oder Oberflächenstruktur und/oder durch eine optische Hervorhebung von Bereichen des Fahrzeugs mittels einer Lichtquelle (insbesondere in Abhängigkeit einer Lichtintensität der Lichtquelle) und hierdurch entstehender leuchtender und/oder beleuchteter (Ober-)Flächen gegebe sein.

Erfindungsgemäß wird auf Grundlage der erfassten Umfelddaten wenigstens eine Sichtbarkeitsgröße, welche für eine Sichtbarkeit des Ego-Fahrzeugs für wenigstens einen weiteren Verkehrsteilnehmer charakteristisch ist, zur (insbesondere durch die Steuervorrichtung assistierten und bevorzugt automatischen) Steuerung der wenigstens einen Lichtfunktion der Beleuchtungseinrichtung des Ego-Fahrzeugs ermittelt (insbesondere durch die insbesondere Prozessor-basierte Steuervorrichtung).

Bevorzugt wird auf Grundlage der Umfelddaten wenigstens eine und bevorzugt eine Vielzahl für eine Umgebungsbedingung und/oder Lichtbedingung und/oder Sichtbedingung charakteristische(r) Größe(n) ermittelt und/oder berechnet und/oder extrahiert. Bevorzugt wird in Abhängigkeit dieser wenigstens einen charakteristischen Größe und besonders bevorzugt in Abhängigkeit der Vielzahl von charakteristischen Größen die wenigstens eine, und bevorzugt eine Vielzahl von, Sichtbarkeitsgröße(n) ermittelt.

Unter Sichtbarkeit wird insbesondere eine visuelle Wahrnehmbarkeit und/oder ein Grad der Erkennbarkeit verstanden. Dabei bezieht sich bevorzugt die "Sichtbarkeit des Ego-Fahrzeugs für wenigstens einen weiteren Verkehrsteilnehmer" auf eine (insbesondere objektiv zu messende und/oder zu bestimmende bzw. messbare und/oder bestimmbare) Sichtbarkeit des Ego-Fahrzeugs aus der Perspektive einer Person, welche beispielsweise (insbesondere als Fahrer) ein von dem Ego-Fahrzeug verschiedenes (Umfeld-)Fahrzeug (als der weitere Verkehrsteilnehmer) nutzt. Die objektive Messung und/oder Bestimmung der Sichtbarkeit des Ego-Fahrzeugs könnte dabei basierend auf einem etwa standardisierten und/oder normierten und/oder beispielhaft verwendeten Modell einer menschlichen visuellen Wahrnehmung (etwa Sichtfeld) und/oder mit Wahl einer (im Wesentlichen typischen) Blickrichtung einer Person als Nutzer des von dem Ego-Fahrzeug verschiedenen Umfeldfahrzeug erfolgen.

Ein derartiges Modell kann dabei zur Ermittlung der Sichtbarkeit, insbesondere zur objektiven Messung und/oder Bestimmung der Sichtbarkeit des Ego-Fahrzeugs aus der Perspektive einer weiteren Person bzw. eines weiteren Verkehrsteilnehmers aus dem Fahrzeugumfeld des Ego-Fahrzeugs vorgegeben und/oder vorgebbar und/oder auf einer (insbesondere fahrzeuginternen Speichereinrichtung des Ego-Fahrzeugs und/oder des Umfeldfahrzeugs) abgelegt sein.

Die Sichtbarkeitsgröße ist bevorzugt charakteristisch für die visuelle Wahrnehmbarkeit des Ego-Fahrzeugs durch den weiteren Verkehrsteilnehmer und besonders bevorzugt durch einen Nutzer des weiteren Verkehrsteilnehmers. Bei dem weiteren Verkehrsteilnehmer handelt es sich bevorzugt um ein (von dem Ego-Fahrzeug verschiedenen) (Umfeld-)Fahrzeug, welches sich insbesondere in dem Fahrzeugumfeld des Ego-Fahrzeugs befindet. So könnte die Sichtbarkeitsgröße beispielsweise in Bezug auf ein auf der Gegenspur der Fahrbahn befindliches und dem Ego-Fahrzeug entgegenkommendes Fahrzeug ermittelt werden. Weiter könnte es sich bei dem Umfeld-Fahrzeug um ein dem Ego-Fahrzeug nachfolgendes Fahrzeug handeln und die Sichtbarkeitsgröße in Bezug auf dieses Umfeld-Fahrzeug ermittelt werden. So könnte es sich um ein sich (beispielsweise mit vergleichsweise hoher Geschwindigkeit) von hinten an das Ego-Fahrzeug annäherndes Fahrzeug handeln.

Die Sichtbarkeitsgröße ist insbesondere dafür charakteristisch, ob der Nutzer des Umfeld-Fahrzeugs (als weiterer Verkehrsteilnehmer) das Ego-Fahrzeug ausreichend sieht. Dabei kann die Sichtbarkeitsgröße dafür charakteristisch sein, ob das Ego-Fahrzeug für den Nutzer des Umfeld-Fahrzeugs (als weiteren Verkehrsteilnehmer) das Ego-Fahrzeug in ausreichendem Maße visuell wahrnehmbar sein könnte. Bevorzugt stellt die Ermittlung der Sichtbarkeitsgröße eine Vornahme einer Prognose dar, ob und/oder wie gut bzw. mit welcher Qualität der Nutzer des Umfeld-Fahrzeugs (als weiteren Verkehrsteilnehmer) das Ego-Fahrzeug voraussichtlich und/oder mit einer vorgegebenen und/oder vorgebbaren Wahrscheinlichkeit optisch bzw. visuell wahrnehmen kann. Dabei kann als Maßstab und/oder als Vergleichsgröße ein Modell der menschlichen visuellen Wahrnehmung und/oder abgelegte Vergleichswerte (etwa für Helligkeiten und/oder Kontraste) verwendet werden.

Bei dem weiteren Verkehrsteilnehmer könnte es sich (zusätzlich oder alternativ) auch um eine (mobile oder stationäre) Infrastruktureinrichtung (insbesondere mit einer Sensoreinrichtung) handeln, welche beispielsweise zu Verkehrsleitzwecken vorgesehen ist.

An bedeckten Tagen mit schlechten Licht- und Kontrastverhältnissen, bei Blendungen z.B. durch einen tiefen Sonnenstand oder bei starkem Regen oder Schneefall, sowie anderen sichtbehindernden Wettereinflüssen wie Wasser-, Schnee- und Staub-/Sand-Verwirbelungen kann es von Vorteil sein, dass die Abblend- und Schlusslichtfunktion unabhängig voneinander ein- und ausgeschaltet werden, um eine bessere Sichtbarkeit für andere zu gewährleisten und gleichzeitig den Energiebedarf gering zu halten.

Aus den eindimensionalen Messdaten des Regen-/Lichtsensors und der Wischgeschwindigkeit und Einschaltdauer der Scheibenwischer kann jedoch nicht abgeleitet werden, ob die separate Einschaltung des Abblend- oder Schlusslichts einen positiven Effekt auf die Sichtbarkeit eines Fahrzeugs durch andere Verkehrsteilnehmer hat. Demgegenüber schlägt das vorgeschlagene Verfahren vorteilhaft insbesondere vor, für ein Sichtverhältnis in dem Umfeld des Ego-Fahrzeugs charakteristischen Umfelddaten zu verwenden und in Abhängigkeit hiervon eine Sichtbarkeitsgröße zu ermitteln, welche für die Sichtbarkeit des Ego-Fahrzeugs für wenigstens einen Verkehrsteilnehmer zur Steuerung der wenigstens einen Lichtfunktion charakteristisch ist. Dies erlaubt vorteilhaft eine energiesparende Anpassung einer Ein- und Ausschaltung der Abblend- und/oder Schlusslicht- und/oder Tagfahrlichtfunktion an Situationen, wie die obig erwähnten schlechten Licht- und/oder Kontrastverhältnisse, welche eine Beleuchtung erfordern.

Bevorzugt wird jeweils eine (eigene) Sichtbarkeitsgröße zur Steuerung der Tagfahrlicht- und/oder Schlusslicht- und/oder Abblendlichtfunktion ermittelt. Bevorzugt erfolgt die Ermittlung dieser (jeweils) auf Grundlage (erfasster) Umfelddaten, welche (insbesondere im Wesentlichen ausschließlich) charakteristisch für ein für die jeweilige Lichtfunktion relevantes Sichtverhältnis sind. Hierdurch kann vorteilhaft eine spezielle für die jeweilige Lichtfunktion angepasste Steuerung vorgenommen werden und lediglich die hierfür relevanten Umfelddaten berücksichtigt werden, was zu einer schnelleren Datenauswertung und Ermittlung führt.

Bei einem bevorzugten Verfahren wird auf Grundlage der Sichtbarkeitsgröße wenigstens eine Steuergröße zur Steuerung der wenigstens einen Lichtfunktion der Beleuchtungseinrichtung des Fahrzeugs ermittelt. Bevorzugt wird die Lichtfunktion der Beleuchtungseinrichtung auf Grundlage der Steuergröße gesteuert. Bevorzugt umfasst das Verfahren ein Erzeugen wenigstens eines Steuersignals (insbesondere durch die insbesondere Prozessor-basierte Steuervorrichtung) zum Steuern der wenigstens einen Lichtfunktion der Beleuchtungseinrichtung, insbesondere zum Steuern der Abblend- und/oder Schlusslicht- und/oder Tagfahrlichtfunktion, des Ego-Fahrzeugs auf Grundlage der Sichtbarkeitsgröße (zur Steuerung der wenigstens einen Lichtfunktion der Beleuchtungseinrichtung des Fahrzeugs).

Bevorzugt ist das erzeugte Steuersignal charakteristisch für die ermittelte Sichtbarkeitsgröße. Bevorzugt wird eine Abblend- und/oder Schlusslicht- und/oder Tagfahrlichtfunktion (und/oder eine Lichtfunktion einer Abblend- und/oder Schlusslicht- und/oder Tagfahrlichteinrichtung) in Abhängigkeit des wenigstens einen Steuersignals und/oder in Abhängigkeit der Sichtbarkeitsgröße gesteuert. Dabei werden bevorzugt die Abblend- und/oder Schlusslicht- und/oder Tagfahrlichtfunktion unabhängig voneinander in Abhängigkeit des Steuersignals gesteuert. Denkbar ist, dass das erzeugte Steuersignal charakteristisch ist für die (insbesondere automatisch) zu steuernde Lichtfunktion.

Denkbar ist auch, dass das Steuersignal charakteristisch ist für erfasste Umfelddaten und/oder hiervon abgeleiteter Daten.

Denkbar ist auch, dass das Steuersignal charakteristisch ist für ein Sichtverhältnis in einem vorgegebenen, ausgewählten (Winkel-)Bereich des Fahrzeugumfelds des Ego-Fahrzeugs, beispielsweise ein vorderer Bereich und/oder ein hinterer Bereich des Fahrzeugumfelds (bezogen auf die Vorwärtsfahrtrichtung des Fahrzeugs) und/oder ein (rechter und/oder linker) seitlicher Bereich des Fahrzeugumfelds des Ego-Fahrzeugs. Zusätzlich oder alternativ kann das Steuersignal charakteristisch sein für eine oder mehrere Sichtbarkeitsgrößen, welche lediglich zur Steuerung einer der Lichtfunktionen ermittelt wurde(n), wobei die Lichtfunktion ausgewählt ist aus der Gruppe von Lichtfunktionen, welche eine Abblend- und/oder Schlusslicht- und/oder Tagfahrlichtfunktion und dergleichen sowie Kombinationen hiervon umfasst. Hierdurch kann vorteilhaft die Abblend- und/oder Schlusslicht- und/oder Tagfahrlichtfunktion bevorzugt unabhängig voneinander gesteuert werden.

Denkbar ist auch, dass das Steuersignal und/oder die Sichtbarkeitsgröße oder eine hierfür charakteristische Größe einer (optischen) Ausgabeeinrichtung (insbesondere des Ego-Fahrzeugs), wie etwa ein Display, zur Ausgabe an den Nutzer des Ego-Fahrzeugs bereitgestellt und/oder durch die Ausgabeeinrichtung ausgegeben wird. Hierdurch könnte der Nutzer des Ego-Fahrzeugs eine manuelle Steuerung wenigstens einer Lichtfunktion vornehmen.

Bei einem weiter bevorzugten Verfahren ist die ermittelte Sichtbarkeitsgröße (und/oder ist das erzeugte Steuersignal) charakteristisch für eine Sichtbarkeit des Ego-Fahrzeugs für wenigstens einen Nutzer des einen weiteren Verkehrsteilnehmers. Dies bietet den Vorteil, dass eine Beleuchtung des Ego-Fahrzeugs mittels Steuerung der Lichtfunktion(en) des Ego-Fahrzeugs an die Sichtbarkeit des Ego-Fahrzeugs in Bezug auf den Nutzer des einen weiteren Verkehrsteilnehmers angepasst werden kann.

Insbesondere betrifft und/oder umfasst das Verfahren eine KI-basierte Erkennung von schlechten Sichtverhältnissen und eine insbesondere unabhängige Steuerung des Abblend- und/oder Schlusslichts.

Bevorzugt umfasst die Steuerung der Lichtfunktion eine Steuerung der Beleuchtungsstärke und/oder Be- und/oder Ausleuchtungsbereich und/oder Be- und/oder Ausleuchtungswinkel.

Mit anderen Worten wird vorgeschlagen, erfasste Umfelddaten, die etwa das gegenwärtige Sichtverhältnis um das Ego-Fahrzeug anzeigen, dahingehend auszuwerten, dass auf Grundlage dieser eine Sichtbarkeitsgröße ermittelt wird, die für eine Sichtbarkeit des Ego-Fahrzeugs unter dem gegenwärtigen Sichtverhältnis charakteristisch ist. Diese Sichtbarkeitsgröße wird bevorzugt dazu verwendet, um eine ressourcenschonende und insbesondere energieeffiziente Steuerung der wenigstens einen Lichtfunktion des Fahrzeug vorzunehmen, die gleichzeitig eine ausreichende Sichtbarkeit des Ego-Fahrzeugs für weitere Verkehrsteilnehmer gewährleistet.

Denkbar ist beispielsweise, dass die Steuerung der wenigstens einen Lichtfunktion (insbesondere mittels der erzeugten Steuerungsgröße) und bevorzugt der Lichtfunktionen nicht nur auf Grundlage der Sichtbarkeitsgröße sondern zusätzlich in Abhängigkeit des wenigstens einen weiteren Verkehrsteilnehmers, etwa des Umfeld-Fahrzeugs, und bevorzugt in Abhängigkeit mehrere Verkehrsteilnehmers vorzunehmen.

So ist denkbar, dass die Sichtbarkeitsgröße und/oder die Steuerungsgröße in Abhängigkeit des (erfassten) wenigstens einen weiteren Verkehrsteilnehmers, insbesondere in Abhängigkeit einer (durch die Steuervorrichtung vorgenommene) Lokalisierung des weiteren Verkehrsteilnehmers in Bezug auf das Ego-Fahrzeug und/oder einer erfassten Fahrtrichtung des weiteren Verkehrsteilnehmers in Bezug auf das Ego-Fahrzeug ermittelt wird. Hierdurch ist möglich, dass ein Abstand zwischen dem Ego-Fahrzeug und dem weiteren Verkehrsteilnehmer und/oder eine Blickrichtung und/oder ein Sichtfeld eines Nutzers des weiteren Verkehrsteilnehmers bei der Ermittlung der Sichtbarkeitsgröße und/oder bei Ermittlung der Steuerungsgröße berücksichtigt wird. Hierdurch ist eine genaue Anpassung der Lichtfunktion an das Sichtbarkeitsverhältnis sowie an die genaue Anordnung der Verkehrsteilnehmer zueinander möglich.

Bevorzugt erfolgt die Erfassung und/oder Erzeugung der Umfelddaten und/oder die Weiterverarbeitung der Umfelddaten oder hiervon abgeleiteter Daten und/oder die Ermittlung der wenigstens einen Sichtbarkeitsgröße in Echtzeit und insbesondere während der Fahrt des Ego-Fahrzeugs.

Bevorzugt werden die Umfelddaten, welche insbesondere charakteristisch sind für ein Sichtverhältnis in dem (Fahrzeug-)Umfeld des Ego-Fahrzeugs, durch wenigstens eine Sensoreinrichtung und/oder eine Kommunikationseinrichtung (insbesondere des Ego-Fahrzeugs) erfasst.

Dabei können die Umfelddaten mittels wenigstens einer Sensoreinrichtung (insbesondere zur Erfassung des Fahrzeugumfelds, bevorzugt des Ego-Fahrzeugs) und bevorzugt mittels einer Vielzahl von Sensoreinrichtungen (insbesondere des Ego-Fahrzeugs) zur Ermittlung eines Licht- und/oder Sichtverhältnisses, insbesondere als Messdaten, erzeugt und/oder aufgenommen werden.

Dabei ist die wenigstens eine Sensoreinrichtung und bevorzugt die Vielzahl von Sensoreinrichtungen ausgewählt aus einer Gruppe von Sensoreinrichtungen ausgewählt, welche wenigstens einen Lichtsensor, wenigstens einen Regensensor, wenigstens einen optischen Sensor, eine (optische) Sensoreinrichtung zur Erfassung ortsaufgelöster Umfelddaten des Fahrzeugumfelds, wenigstens eine Bildaufnahmeeinrichtung, insbesondere wenigstens eine Kamera und bevorzugt mehrere Kameras, besonders bevorzugt eine Rückfahrkamera, besonders bevorzugt eine Frontkamera, eine Stereokamera, einen thermischen Sensor, einen Ultraschallsensor, einen Lidar-Sensor, einen Radar-Sensor und dergleichen sowie Kombinationen hiervon umfasst.

Bevorzugt zeigen die erfassten und/oder ermittelten und/oder mittels der wenigstens einen Sensoreinrichtung erzeugten Umfelddaten wenigstens eine Umgebungsbedingung und/oder Lichtbedingung und/oder Sichtbedingung an bzw. sind charakteristisch hierfür. Hierdurch kann die Sichtbarkeitsgröße abgestimmt auf die gegenwärtig vorherrschende(n) Lichtbedingung(en) und/oder Sichtbedingung(en) und/oder Umgebungsbedingung(en) ermittelt und die Lichtfunktion in Abhängigkeit hiervon gesteuert werden.

Zusätzlich oder alternativ kann es sich bei den erfassten Umfelddaten wenigstens teilweise um Umfelddaten, welche für bevorzugt standortbezogene Klima- und/oder Wetterdaten charakteristisch sind, handeln. Bevorzugt handelt es sich bei den erfassten Umfelddaten (wenigstens teilweise) um (bevorzugt standortbezogene) Klima- und/oder Wetterdaten. Dabei beziehen sich die Klima- und/oder Wetterdaten bevorzugt auf den Standort des Ego-Fahrzeugs.

Bevorzugt beziehen sich die Umfelddaten, welche für bevorzugt standortbezogene Klima- und/oder Wetterdaten charakteristisch sind, auf den (gegenwärtigen und/oder vorgegebenen und/oder einen vorgebbaren insbesondere zukünftigen) Standort des Ego-Fahrzeugs. Bevorzugt werden die Umfelddaten, mittels wenigstens einer Sensoreinrichtung (insbesondere des Ego-Fahrzeugs) erfasst und/oder ermittelt. Bevorzugt handelt es sich bei der Sensoreinrichtung um einen Fahrzeugpositionssensor, insbesondere einen GPS-Sensor, zur Bestimmung der Fahrzeugposition. Bevorzugt werden unter Verwendung der ermittelten Fahrzeugposition die für die bevorzugt standortbezogenen Klima- und/oder Wetterdaten charakteristischen Umfelddaten ermittelt.

Bevorzugt erfolgt die Ermittlung der Sichtbarkeitsgröße auf Grundlage abgerufener (insbesondere standortbezogener) Klima- und/oder Wetterdaten bzw. hierfür charakteristische Umfelddaten. Bevorzugt werden die Klima- und/oder Wetterdaten bzw. die hierfür charakteristische Umfelddaten in Abhängigkeit der ermittelten und/oder erfassten Fahrzeugposition beispielsweise über einen Online-Wetterdienst abgerufen. Zusätzlich oder alternativ können die Klima- und/oder Wetterdaten bzw. die hierfür charakteristische Umfelddaten unter Zuhilfenahme eines Mobilfunknetzes beispielsweise bei einem Online-Wetterdienst abgerufen werden.

Zusätzlich oder alternativ können, insbesondere standortbezogene, Klima- und/oder Wetterdaten oder hierfür charakteristische Umfelddaten mittels einer (insbesondere digitalen) Kommunikationsverbindung, beispielsweise mittels DAB+ und/oder (mobile) Onlinedienste, abgerufen werden. Hierdurch ist es möglich, auf äußerst präzise Messdaten und/oder Prognosegrößen (etwa von unabhängigen Anbietern) zuzugreifen und diese zu verwenden. Diese können Klima- und/oder Wetterdaten können dabei zur Plausibilisierung und/oder als Ergänzung zu den von einer Sensoreinrichtung (zur Erfassung des Fahrzeugumfelds, etwa des Ego-Fahrzeugs) verwendet werden.

Bevorzugt handelt es sich bei der Kommunikationsverbindung um eine drahtlose Kommunikationsverbindung, wobei bevorzugt ein privates und/oder öffentliches Netzwerk verwendet wird. Bei dem Netzwerk kann es sich auch um ein lokales Netzwerk, wie etwa ein WLAN-Netz handeln.

Alternativ oder zusätzlich ist möglich, dass die Umfelddaten über eine Car2Car-Kommunikation, C2C-Kommunikation und/oder Car2x-Kommunikation und/oder Car2I-Kommunikation, (von der Steuervorrichtung) empfangen werden und/oder beispielsweise von einem von dem Ego-Fahrzeug verschiedenen (und hiervon beabstandeten) Einrichtung, wie beispielsweise einem Umfeld-Fahrzeug oder einer Infrastruktureinrichtung, aufgenommen und/oder erzeugt und (an die Steuervorrichtung) zur Erfassung der Umfelddaten übermittelt werden. Auf diese Weise ist es vorteilhaft möglich, dass von einem weiteren Fahrzeug, beispielsweise einem vorausfahrenden Fahrzeug, aufgenommene Daten zur Analyse und bevorzugt zur Prognose einer Sichtbarkeitsgröße verwendet werden. Damit kann eine schnellere Einstellung einer an die gegenwärtige Sichtverhältnis angepasste Einstellung einer Lichtfunktion vorgenommen werden.

Denkbar ist beispielsweise, dass derart von einer von dem Ego-Fahrzeug verschiedenen Einrichtung übermittelte Umfelddaten bereits vorverarbeitet sind, indem bereits auf Grundlage von Roh-Sensordaten ermittelte und/oder identifizierte Objekte und/oder Sichtverhältnisse und/oder Umgebungsbedingungen und/oder Lichtbedingungen und/oder Sichtbedingungen zu Ermittlung der Sichtbarkeitsgröße (an das Ego-Fahrzeug und/oder an die Steuervorrichtung) übermittelt werden.

Bevorzugt wird zur Ermittlung der Sichtbarkeitsgröße wenigstens ein Verkehrsteilnehmer (aus dem Fahrzeugumfeld des Ego-Fahrzeugs) ausgewählt. Bevorzugt wird die Sichtbarkeitsgröße in Abhängigkeit von (erfassten) Daten, bevorzugt in Abhängigkeit einer (insbesondere in Bezug auf das Ego-Fahrzeug relativen) Fahrzeugposition, in Bezug auf diesen (ausgewählten) Verkehrsteilnehmer ermittelt. Bevorzugt weist das Ego-Fahrzeug einen Abstandssensor auf und ermittelt wenigstens einen Abstand wenigstens eines weiteren Verkehrsteilnehmers (aus dem Fahrzeugumfeld des Ego-Fahrzeugs) und bevorzugt zu allen weiteren Verkehrsteilnehmern (aus einem vorgegebenen Fahrzeugumfeld des Ego-Fahrzeugs). Bevorzugt erfolgt die Auswahl des Verkehrsteilnehmers in Abhängigkeit wenigstens eines ermittelten Abstands, wodurch vorteilhaft ein (in Abhängigkeit des ermittelten Abstands prognostiziertes und/oder ermitteltes) Sichtverhältnis an der Position des weiteren Verkehrsteilnehmers berücksichtigt werden kann.

Bevorzugt wird die Sichtbarkeitsgröße (zusätzlich) in Abhängigkeit des von dem ermittelten Abstand (und/oder der Fahrzeugposition) des (ausgewählten) Verkehrsteilnehmers ermittelt.

Bevorzugt wird ermittelt, auf welcher Fahrspur sich der weitere Verkehrsteilnehmer und/oder das Umfeld-Fahrzeug befindet. Denkbar ist, dass die Auswahl des Verkehrsteilnehmers in Bezug auf die jeweilige von dem Verkehrsteilnehmer befahrene Fahrspur und/oder dem Abstand vorgenommen wird. So kann vorteilhaft eine Priorisierung eines Verkehrsteilnehmers vorgenommen werden, auf welchen die Lichtfunktion vorrangig abgestimmt werden soll. Bevorzugt erfolgt eine Priorisierung in Bezug auf die Verkehrssicherheit. So könnte beispielsweise ein auf einer (benachbarten) Gegenfahrspur befindliches Umfeld-Fahrzeug priorisiert ausgewählt werden.

Bevorzugt wird (wie obig erwähnt) die Sichtbarkeitsgröße basierend auf wenigstens einem Modell zur menschlichen visuellen Wahrnehmung ermittelt. Denkbar ist auch, dass das Modell zur menschlichen Wahrnehmung an den Nutzer des weiteren Verkehrsteilnehmers angepasst wird, beispielsweise indem nutzerspezifische Daten, wie für eine Sehstärke und/oder Sitzposition bzw. Augenposition des Nutzers charakteristische Daten, und/oder ein (prognostizierter) Blickwinkel berücksichtigt werden.

Bei einem weiter bevorzugten Verfahren handelt es sich bei der Sichtbarkeitsgröße um eine Prognosegröße. Dies bietet den Vorteil, dass keine Interaktion mit dem weiteren Verkehrsteilnehmer und/oder dem Nutzer eines Umfeldfahrzeugs (als weiterer Verkehrsteilnehmer) erforderlich ist. Hierdurch kann eine besonders schnelle Anpassung an eine Umgebungssituation ohne jegliche Reaktionszeit des weiteren Verkehrsteilnehmers abwarten zu müssen.

Bei einem weiter bevorzugten Verfahren wird die als Prognosegröße ermittelte Sichtbarkeitsgröße auf Grundlage von durch wenigstens eine Sensoreinrichtung des Ego-Fahrzeugs erfassten Umfelddaten ermittelt.

Bei einem weiter bevorzugten Verfahren wird die als Prognosegröße ermittelte Sichtbarkeitsgröße auf Grundlage von durch wenigstens eine Sensoreinrichtung aus einem bzw. dem Umfeld des Ego-Fahrzeugs, bevorzugt durch eine Sensoreinrichtung eines von dem Ego-Fahrzeug verschiedenen Umfeld-Fahrzeugs (insbesondere des weiteren Verkehrsteilnehmers) und/oder einer insbesondere stationären Sensoreinrichtung einer Infrastruktureinrichtung, erfassten Umfelddaten ermittelt. Dies bietet den Vorteil, dass beispielsweise bereits zeitlich vorab ermittelte Umfelddaten des Fahrzeugumfelds zu einer bestimmten Fahrzeugposition des Ego-Fahrzeugs und/oder eine beobachtete und/oder in den Umfelddaten erfasste zeitliche Entwicklung eines Sichtverhältnisses (etwa von einer stationären Sensoreinrichtung ermittelt) bei der Ermittlung der Sichtbarkeitsgröße verwendet und/oder berücksichtigt werden können.

Weiter vorteilhaft könnte die Ermittlung der Sichtbarkeitsgröße auf Grundalge von Umfelddaten erfolgen, die von dem weiteren Verkehrsteilnehmer (bzw. einer Sensoreinrichtung dieses weiteren Verkehrsteilnehmers) und/oder in Bezug auf den weiteren Verkehrsteilnehmer erfasst und/oder erzeugt und/oder ermittelt wurden/werden. Dies bietet den Vorteil, dass auf diese Weise Umfelddaten, die bevorzugt unmittelbar ein Sichtverhältnis an der Position des weiteren Verkehrsteilnehmers abbilden und/oder hierfür charakteristisch sind, verwendet werden können und dadurch eine genauere Auswertung in Bezug auf eine Sichtbarkeit aus Perspektive des weiteren Verkehrsteilnehmers möglich ist.

So könnte beispielsweise aus den, insbesondere ortsaufgelösten, Umfelddaten, welche durch eine Sensoreinrichtung des weiteren Verkehrsteilnehmers zur Erfassung des Fahrzeugumfelds des weiteren Verkehrsteilnehmers erfasst und/oder erzeugt und/oder ermittelt wurden, dahingehend ausgewertet werden (beispielsweise von dem Verkehrsteilnehmer selbst und/oder der Steuervorrichtung), ob das Ego-Fahrzeug in den Umfelddaten identifizierbar ist und/oder abgebildet ist.

Denkbar ist auch, dass auf Grundlage der (insbesondere von dem weiteren Verkehrsteilnehmer erfassten und/oder ermittelten) Umfelddaten eine Objektdetektion zur Detektion wenigstens eines, bevorzugt stationären, Objekts aus dem Fahrzeugumfeld vorgenommen wird, und auf Grundlage des detektierten wenigstens einen, bevorzugt stationären, Objekt aus dem Fahrzeugumfeld und bevorzugt zusätzlich in Abhängigkeit einer ermittelten Position des, bevorzugt stationären, Objekts in dem Fahrzeugumfeld (bevorzugt relativ zu dem weiteren Verkehrsteilnehmer), die wenigstens eine Sichtbarkeitsgröße ermittelt wird. Die Ermittlung des detektierten, bevorzugt stationären, Objekts könnte beispielsweise über eine Lokalisierung des, bevorzugt stationären, Objekts auf Grundlage von Kartendaten und/oder Navigationsdaten erfolgen. Beispielsweise könnte bei Detektion einer Landmarke als Objekt (wie beispielsweise einer Brücke), welche in Kartendaten und/oder Navigationsdaten verzeichnet ist, auf Grundlage des relativen Abstands des weiteren Verkehrsteilnehmers und dem Objekt (durch Vergleich der Position des Objekts mit der Position des weiteren Verkehrsteilnehmers) eine Qualität eines Sichtverhältnisses ermittelt werden. Bei vorliegendem Nebel könnte beispielsweise ein eingeschränktes Sichtverhältnis und das Maß der Einschränkung ermittelt werden. Basierend hierauf könnte eine Sichtbarkeit des Ego-Fahrzeugs aus der Perspektive des weiteren Verkehrsteilnehmers abgeleitet werden.

Bevorzugt stellt der weitere Verkehrsteilnehmer von einer Sensoreinrichtung des weiteren Verkehrsteilnehmers erfasste Umfelddaten der Steuervorrichtung und/oder dem Ego-Fahrzeug bereit, so dass diese auf diese Umfelddaten zugreifen und zur Ermittlung der Sichtbarkeitsgröße verwenden können.

Bevorzugt ermittelt (auch umgekehrt) das Ego-Fahrzeug eine für eine Sichtbarkeit eines (bevorzugt jedes) entgegenkommenden Verkehrsteilnehmers, bevorzugt Fahrzeugs, charakteristische Sichtbarkeitsgröße. Aus dieser könnte ebenfalls die zu ermittelnde Sichtbarkeitsgröße, welche für die Sichtbarkeit des Ego-Fahrzeugs für wenigstens einen weiteren Verkehrsteilnehmer charakteristisch ist, ermittelt werden. Dies könnte beispielsweise als identisch angenommen werden unter der Annahme, dass die wechselseitige Sichtbarkeit zweier Fahrzeuge untereinander vergleichbar oder im Wesentlichen gleich ist.

Bei einem weiter bevorzugten Verfahren erzeugt eine in dem Umfeld des Ego-Fahrzeugs befindliche Sensoreinrichtung Umfelddaten zur Erfassung des Ego-Fahrzeugs. Unter Umfelddaten zur Erfassung des Ego-Fahrzeugs wird insbesondere verstanden, dass Umfelddaten erfasst werden, welche das Ego-Fahrzeug wenigstens bereichsweise und bevorzugt vollständig insbesondere aus der Perspektive des weiteren Verkehrsteilnehmers abbilden und/oder hierfür charakteristisch sind.

Bevorzugt wird die Sichtbarkeitsgröße auf Grundlage dieser erzeugten Umfelddaten ermittelt. Bevorzugt werden die von der in dem Umfeld des Ego-Fahrzeugs befindlichen Sensoreinrichtung erzeugten Umfelddaten oder hiervon abgeleitete Daten, insbesondere eine auf Grundlage der Umfelddaten ermittelte Sichtbarkeitsgröße, an das Ego-Fahrzeug übermittelt.

Dies bietet den Vorteil, dass ein optisches Erscheinungsbild des Ego-Fahrzeugs unmittelbar berücksichtigt und die Sichtbarkeitsgröße unmittelbar an das Ego-Fahrzeug angepasst wird. So kann die Ermittlung der Sichtbarkeitsgröße unmittelbar an Fahrzeugdaten in Bezug auf das Ego-Fahrzeug, welche insbesondere das optische Außen-Erscheinungsbild des Ego-Fahrzeugs beeinflussen, wie beispielsweise eine Farbe und/oder eine geometrische Ausdehnung des Ego-Fahrzeugs und/oder eine geometrische Form (insbesondere im Wesentlichen aus Sicht des weiteren Verkehrsteilnehmers), angepasst werden.

Auch bei etwa durch Nebel eingeschränkter Sicht kann beispielsweise ein in roter Farbe gehaltenes Ego-Fahrzeug besser als ein in grauer Farbe gehaltenes Ego-Fahrzeug optisch wahrgenommen werden, so dass die Sichtbarkeit auch abhängig von der Farbe oder Größe (etwa Höhe und/oder Breite und/oder Länge des Ego-Fahrzeugs) sein kann. Dies kann hierdurch vorteilhaft bei der Ermittlung der Sichtbarkeitsgröße (durch Verwendung von Umfelddaten, welche das Ego-Fahrzeug wenigstens bereichsweise abbilden) berücksichtigt werden.

Bevorzugt wird hier als Sensoreinrichtung zur Erfassung des Ego-Fahrzeugs eine Sensoreinrichtung des weiteren Verkehrsteilnehmers verwendet.

Bei einem weiter bevorzugten Verfahren werden zur Ermittlung und/oder zur Bereitstellung der Sichtbarkeitsgröße Umfelddaten und/oder hiervon abgeleitete Daten, wie beispielsweise die auf Grundlage der Umfelddaten ermittelte (wenigstens eine) Sichtbarkeitsgröße, und/oder Informationen in Bezug auf den (aktuellen) Beleuchtungszustand zwischen einem von dem Ego-Fahrzeug verschiedenen Umfeld-Fahrzeug (etwa als weiteren Verkehrsteilnehmer) und/oder einer (stationären) Einrichtung aus dem Umfeld des Ego-Fahrzeugs einerseits und dem Ego-Fahrzeug und/oder einer bzw. der Steuervorrichtung (insbesondere der nachfolgend näher beschriebenen Steuervorrichtung für eine Beleuchtungseinrichtung des Ego-Fahrzeugs) andererseits übermittelt und/oder ausgetauscht. Dabei handelt es sich bevorzugt bei den Umfelddaten um Daten in Bezug auf Informationen zur (gegenseitigen bzw. jeweils wechselseitigen) Sichtbarkeit aus Sicht bzw. aus Perspektive des jeweils anderen Verkehrsteilnehmers.

So können etwa Informationen zwischen dem Ego-Fahrzeug und dem weiteren Verkehrsteilnehmer, insbesondere über eine Kommunikationsverbindung, in Bezug auf die Sichtbarkeit und/oder ein Maß für die Sichtbarkeit des Ego-Fahrzeugs aus Sicht des weiteren Verkehrsteilnehmers ausgetauscht werden. Denkbar ist auch, dass umgekehrt zusätzlich oder alternativ Informationen zwischen dem Ego-Fahrzeug und dem weiteren Verkehrsteilnehmer, insbesondere über die Kommunikationsverbindung, in Bezug auf die Sichtbarkeit und/oder ein Maß für die Sichtbarkeit des weiteren Verkehrsteilnehmers aus Sicht des Ego-Fahrzeug ausgetauscht werden.

Bevorzugt handelt es sich bei der Kommunikationsverbindung (jeweils) um eine drahtlose Kommunikationsverbindung, wobei bevorzugt ein privates und/oder öffentliches Netzwerk verwendet wird. Bei dem Netzwerk kann es sich auch um ein lokales Netzwerk, wie etwa ein WLAN-Netz handeln. Alternativ oder zusätzlich ist möglich, dass die Informationen über eine Car2Car-Kommunikation, C2C-Kommunikation und/oder mittels Car2x-Kommunikation und/oder Car2I-Kommunikation, (von der Steuervorrichtung) empfangen werden und/oder übermittelt werden.

Unter Informationen in Bezug auf den (aktuellen) Beleuchtungszustand sind bevorzugt Informationen zu verstehen, welche charakteristisch ist für Einschaltzustand und/oder Beleuchtungsstärke wenigstens einer Beleuchtungseinrichtung des (eigenen und/oder jeweils anderen Fahrzeugs). So kann beispielsweise der weitere Verkehrsteilnehmer (erfassen und) an das Ego-Fahrzeug Umfelddaten oder hiervon abgeleitete Daten und/oder Beleuchtungszustandsdaten (welche bevorzugt aus den ermittelten Umfelddaten abgeleitet sind) an das Ego-Fahrzeug übermitteln, welche charakteristisch dafür sind, ob bei dem Ego-Fahrzeug die Scheinwerfer und/oder das Tagfahrlicht und/oder das Schlusslicht und/oder das Abblendlicht aktiviert ist.

Bevorzugt werden (zusätzlich oder alternativ) durch den weiteren Verkehrsteilnehmer (das Umfeld-Fahrzeug) an das Ego-Fahrzeug Umfelddaten und/oder hiervon abgeleitete Daten und/oder die wenigstens eine auf Grundlage der Umfelddaten und/oder hiervon abgeleitete Daten ermittelte Sichtbarkeitsgröße, welche charakteristisch ist für die Sichtbarkeit des Ego-Fahrzeugs für den weiteren Verkehrsteilnehmer, an das Ego-Fahrzeug übermittelt. Beispielsweise könnte der weitere Verkehrsteilnehmer (das Umfeld-Fahrzeug) über die Kommunikationsverbindung eine Nachricht an das Ego-Fahrzeug übermitteln, welche anzeigen, dass die Sichtbarkeit des Ego-Fahrzeugs aus Sicht des Umfeld-Fahrzeugs schlecht ist.

Bevorzugt empfängt das Ego-Fahrzeug und/oder die Steuervorrichtung für das Ego-Fahrzeug die von dem Umfeld-Fahrzeug bzw. dem weiteren Verkehrsteilnehmer an das Ego-Fahrzeug übermittelten Umfelddaten und/oder hiervon abgeleitete Daten und/oder die wenigstens eine auf Grundlage der Umfelddaten und/oder hiervon abgeleitete Daten ermittelte Sichtbarkeitsgröße, welche charakteristisch ist für die Sichtbarkeit des Ego-Fahrzeugs für den weiteren Verkehrsteilnehmer. Bevorzugt nimmt das Ego-Fahrzeug auf Grundlage der übermittelten Umfelddaten und/oder hiervon abgeleitete Daten und/oder die wenigstens eine auf Grundlage der Umfelddaten und/oder hiervon abgeleitete Daten ermittelte Sichtbarkeitsgröße, welche charakteristisch ist für die Sichtbarkeit des Ego-Fahrzeugs für den weiteren Verkehrsteilnehmer, die Steuerung wenigstens einer Lichtfunktion vor.

Bevorzugt übermittelt das Ego-Fahrzeug eine Empfangsbestätigung der von dem Umfeld-Fahrzeug bzw. dem weiteren Verkehrsteilnehmer übermittelten Nachricht und/oder Informationen (über die Kommunikationsverbindung), welche eine Reaktion des Ego-Fahrzeugs auf den Inhalt der Nachricht des weiteren Verkehrsteilnehmers anzeigen oder hierfür charakteristisch ist. Beispielsweise könnte das Ego-Fahrzeug dem weiteren Verkehrsteilnehmer mitteilen, dass es seine Scheinwerfer aktivieren wird.

Weiterhin kann bevorzugt auch das Ego-Fahrzeug auf Grundlage erfasster Umfelddaten eine Sichtbarkeitsgröße (charakteristisch für die Sichtbarkeit des weiteren Verkehrsteilnehmers insbesondere für das Ego-Fahrzeug) ermitteln und eine hierfür charakteristische Größe und/oder eine von dem Ego-Fahrzeug erfasste und/oder ermittelte für den Beleuchtungszustand des weiteren Verkehrsteilnehmers charakteristische Größe dem weiteren Verkehrsteilnehmer bzw. dem Umfeld-Fahrzeug übermitteln. Hieran anschließend kann das Umfeld-Fahrzeug bzw. der weitere Verkehrsteilnehmer seine

Bevorzugt erfolgt (insbesondere durch das Umfeld-Fahrzeug und/oder den weiteren Verkehrsteilnehmer und/oder durch die Steuervorrichtung) eine wiederholte Erfassung und/oder Ermittlung von Umfelddaten und eine auf Grundlage hierauf vorgenommene wiederholte Ermittlung wenigstens einer Sichtbarkeitsgröße, welche für die Sichtbarkeit des Ego-Fahrzeugs für den weiteren Verkehrsteilnehmer charakteristisch ist. Bevorzugt erfolgt basierend auf der wiederholt ermittelten Sichtbarkeitsgröße ein Vergleich mit der zuvor ermittelten Sichtbarkeitsgröße, so dass vorteilhaft eine Veränderung der Sichtbarkeit und insbesondere eine Verbesserung der Sichtbarkeit beurteilt werden kann.

Bevorzugt wird die wiederholte Erfassung und/oder Ermittlung von Umfelddaten und/oder die wiederholte Ermittlung wenigstens einer Sichtbarkeitsgröße, welche für die Sichtbarkeit des Ego-Fahrzeugs für den weiteren Verkehrsteilnehmer charakteristisch ist, ausgelöst durch eine Änderung der Steuerung wenigstens einer Beleuchtungseinrichtung, wie beispielsweise einer Aktivierung und/oder Deaktivierung einer Lichtfunktion und/oder einer Änderung einer Beleuchtungsintensität und/oder eines Beleuchtungsbereichs einer Beleuchtungseinrichtung (des Ego-Fahrzeugs). Bevorzugt kann durch den Vergleich die Wirkung der durch die ermittelte Sichtbarkeitsgröße ausgelöste Steuerung der Lichtfunktion überprüft werden.

Bevorzugt wird die wenigstens eine Sichtbarkeitsgröße (welche charakteristisch ist für die Sichtbarkeit des Ego-Fahrzeugs für den weiteren Verkehrsteilnehmers bzw. das Umfeld-Fahrzeug, insbesondere also aus Sicht des weiteren Verkehrsteilnehmers bzw. das Umfeld-Fahrzeug) durch die Steuervorrichtung für das Ego-Fahrzeug und/oder das Ego-Fahrzeug, insbesondere auf Grundlage auf durch das Ego-Fahrzeug erzeugte und/oder ermittelte Umfelddaten, ermittelt. Bevorzugt erfolgt eine Verifizierung und/oder Evaluierung dieser Sichtbarkeitsgröße auf Grundalge von durch den weiteren Verkehrsteilnehmer bzw. durch das Umfeld-Fahrzeug erzeugte und/oder ermittelte und/oder erfasste Umfelddaten und/oder durch den weiteren Verkehrsteilnehmer und/oder das Umfeldfahrzeug ermittelte weitere Sichtbarkeitsgröße, welche charakteristisch ist für die Sichtbarkeit des Ego-Fahrzeugs für diesen weiteren Verkehrsteilnehmer bzw. für dieses Umfeldfahrzeug selbst. Bevorzugt wird die weitere Sichtbarkeitsgröße als Feedback für das verwendete Verfahren zur Ermittlung der Sichtbarkeitsgröße und/oder einzelne Verfahrensschritte hiervon verwendet.

Damit (durch Ermittlung der weiteren Sichtbarkeitsgröße) erfolgt also bevorzugt eine redundante Ermittlung der Sichtbarkeitsgröße.

Dies bietet den Vorteil, dass die Ermittlung der Sichtbarkeitsgröße durch das Ego-Fahrzeug selbst oder durch die Steuervorrichtung für das Ego-Fahrzeug (unabhängig) überprüft und einzelne Verfahrensschritte der Ermittlung der Sichtbarkeitsgröße (beispielsweise nachfolgend beschriebenes Sichtbarkeits-Modell maschinellen Lernens, verbessert werden kann.

Bevorzugt wird die Sichtbarkeitsgröße nicht nur aus Messdaten eines Regen- und/oder Lichtsensors und/oder einer Wischgeschwindigkeit und/oder Einschaltdauer eines Scheibenwischers ermittelt, sondern bevorzugt wird die Sichtbarkeitsgröße auf Grundlage einer Vielzahl verschiedenartiger Umfelddaten, welche mittels verschiedenartigen Sensoreinrichtungen und/oder Kommunikationseinrichtungen erfasst werden, ermittelt. Bevorzugt sind die verschiedenartigen Sensoreinrichtungen jeweils aus der obig angegebenen Gruppe von Sensoreinrichtungen ausgewählt. Bevorzugt werden Umfelddaten aus wenigstens zwei, bevorzugt wenigstens drei, bevorzugt wenigstens vier, bevorzugt wenigstens fünf verschiedenartiger Sensoreinrichtung (wobei bevorzugt die Verschiedenartigkeit der Sensoreinrichtungen fahrzeugübergreifend betrachtet wird) ausgewählt. Vorteilhaft können durch diese Sensordatenfusion die verschiedenen Informationsgehalte der verschiedenen Arten bzw. Typen von Sensoreinrichtungen genutzt werden.

Vorteilhaft wird hierdurch erreicht, dass die Ermittlung der Sichtbarkeitsgröße und/oder die Steuerung der wenigstens einen Lichtfunktion nicht (nur) über den Regen- und/oder Lichtsensor und/oder Daten des Scheibenwischers erfolgt, sondern auf Grundlage einer Fusion unterschiedlicher Daten aus verschiedenen Quellen, wie z.B. Informationen über die Erkennbarkeit des eigenen Fahrzeugs (Ego-Fahrzeugs) durch andere Verkehrsteilnehmer (z.B. via Car2X), standortgenaue Wetterdaten, Messung der Licht- und/oder Kontrastverhältnisse über eigene Sensoreinrichtungen (des Ego-Fahrzeugs, z.B. via Kamera, Rechen-/Lichtsensor, usw.) und/oder Sensoreinrichtungen weiterer bzw. anderer Verkehrsteilnehmer oder im Verkehrsraum.

Bevorzugt wird auf Grundlage der erfassten Umfelddaten wenigstens ein Wert für wenigstens eine Umgebungsbedingung und/oder wenigstens eine Lichtbedingung und/oder wenigstens eine Sichtbedingung (wie beispielsweise Licht- und/oder Kontrast- und/oder Helligkeitsverhältnisse) oder eine hierfür charakteristische Größe ermittelt und in Abhängigkeit hiervon die wenigstens eine Sichtbarkeitsgröße ermittelt. Beispielsweise könnte aus den Umfelddaten wenigstens ein Wert für ein Licht- und/oder Kontrastverhältnis ermittelt werden und in Abhängigkeit hiervon die wenigstens eine Sichtbarkeitsgröße ermittelt werden.

Bevorzugt erfolgt die Ermittlung (jeweils) des wenigstens einen Werts, bevorzugt jeweils der Vielzahl von Werten, für wenigstens eine Umgebungsbedingung und/oder wenigstens eine Lichtbedingung und/oder wenigstens eine Sichtbedingung (insbesondere jeweils) ortsaufgelöst (insbesondere in Relation auf die Fahrzeugposition des Ego-Fahrzeugs und/oder das Umfeld-Fahrzeug bzw. den weiteren Verkehrsteilnehmer), so dass aus Sicht des Ego-Fahrzeugs und/oder aus Sicht des Umfeld-Fahrzeugs bzw. des weiteren Verkehrsteilnehmers eine Sichtbarkeit (oder ein Ausleuchtungszustand des Fahrzeugumfelds) prognostiziert und/oder beurteilt werden kann.

Weiter vorteilhaft kann bei einer ortsaufgelösten Ermittlung dieser Werte bzw. hierfür charakteristischer Größen wenigstens ein Bereich des Fahrzeugumfelds und/oder des Fahrzeugs (und/oder ein diesem Bereich zur Ausleuchtung und/oder Beleuchtung zugeordnete Lichtfunktion der Beleuchtungseinrichtung des Ego-Fahrzeugs) bestimmt werden, welcher noch nicht ausreichend beleuchtet ist und/oder bei welchem ein Beleuchtungszustand unter Gewährleistung eines ausreichenden Beleuchtungszustands reduziert werden kann. Insbesondere ermöglicht eine ortsaufgelöste Ermittlung der Werte bzw. der hierfür charakteristischen Größe eine unterschiedliche und/oder unabhängige Steuerung der verschiedenen Lichtfunktionen voneinander. Die unterschiedliche und/oder unabhängige Steuerung kann beispielsweise über die Ermittlung verschiedener, bevorzugt zur Beleuchtung und/oder Ausleuchtung unterschiedlichen Bereichen des Fahrzeugumfelds und/oder des Fahrzeugs zugeordneter, Sichtbarkeitsgrößen umgesetzt werden. Hierdurch kann eine Feineinstellung des Beleuchtungszustands des Ego-Fahrzeugs und/oder des (insbesondere bereichsweisen) Ausleuchtungszustands des Fahrzeugumfelds des Ego-Fahrzeugs erreicht werden.

Bevorzugt werden eine Vielzahl von Werten für jeweils (verschiedene) Umgebungsbedingungen und/oder Lichtbedingungen und/oder Sichtbedingungen oder hierfür charakteristische Größen ermittelt und in Abhängigkeit der Vielzahl von Werten die wenigstens eine Sichtbarkeitsgröße ermittelt.

Bei einem weiter bevorzugten Verfahren erfolgt die Ermittlung der Sichtbarkeitsgröße basierend auf einem trainierten, insbesondere trainierbaren, Sichtbarkeits-Modell maschinellen Lernens zur Klassifizierung von Sichtverhältnissen, insbesondere mittels Ermittlung der Sichtbarkeitsgröße (und/oder mittels Klassifizierung in verschiedene Klassen in Bezug auf eine, insbesondere obig näher ausgeführte, Umgebungsbedingung und/oder, insbesondere obig näher ausgeführte, Lichtbedingung und/oder, insbesondere obig näher ausgeführte, Sichtbedingung), auf Grundlage der von wenigstens einer Sensoreinrichtung erfassten und bevorzugt von einer Vielzahl von verschiedenen Sensoreinrichtungen erfassten Umfelddaten, wobei das Sichtbarkeits-Modell maschinellen Lernens einen Satz insbesondere trainierbarer, Parameter umfasst, welche auf Werte eingestellt sind, die als Ergebnis eines Trainingsprozesses gelernt wurden.

Dies bietet den Vorteil, dass ein auf eine Vielzahl verschiedener Quellen von Umfelddaten angepasstes Verfahren zur Ermittlung einer Sichtbarkeitsgröße bereitgestellt und verwendet werden kann, welches automatisch wiederauftretende Muster übergreifend in den Umfelddaten verschiedenartiger Sensoreinrichtungen erkennen kann und deren Auswirkungen auf die Sichtbarkeitsgröße ermitteln kann. Hierdurch können bevorzugt komplexe Abhängigkeiten von einer Vielzahl verschiedener Größen berücksichtigt werden.

Bevorzugt wird ein durch das nachfolgend beschriebene Verfahren zur Erzeugung eines trainierten Sichtbarkeits-Modells maschinellen Lernens zur Ermittlung wenigstens einer Sichtbarkeitsgröße verwendet.

Bevorzugt basiert die Ermittlung der wenigstens einen Sichtbarkeitsgröße auf Grundlage der (von der wenigstens einen Sensoreinrichtung erzeugten) (Roh-)Umfelddaten oder hieraus abgeleiteter Daten auf (computer-implementierten) Verfahren des maschinellen Lernens, bevorzugt auf wenigstens einem (künstlichen) neuronalen Netzwerk basierenden Verfahren des maschinellen Lernens. Ein solches neuronales Netzwerk kann beispielsweise als tiefes neuronales Netzwerk (Deep Neural Network, DNN) und/oder ein sogenanntes Convolutional Neural Network (CNN) (dt. Faltungsnetzwerk) und/oder ein rekurrentes Neuronales Netzwerk (RNN, engl. Recurrent Neural Network) ausgestaltet sein.

Bevorzugt umfasst die Ermittlung der wenigstens einen Sichtbarkeitsgröße eine Ausführung von Computer-Vision-Verfahren bzw. Wahrnehmungsverfahren (von Objekten).

Bei einem weiter bevorzugten Verfahren ist das Abblendlicht des Ego-Fahrzeugs unabhängig von dem Schlusslicht des Ego-Fahrzeugs, insbesondere in Abhängigkeit der wenigstens einen (ermittelten) Sichtbarkeitsgröße und bevorzugt in Abhängigkeit einer Vielzahl von, insbesondere im Wesentlichen zeitgleich und/oder im Wesentlichen auf Grundlage derselben erzeugten (Roh-)Umfelddaten, (ermittelten) Sichtbarkeitsgrößen, steuerbar und/oder (wird) gesteuert. Hierdurch kann im Vergleich zum Einschalten der gesamten Beleuchtung (Abblendlicht und Schlusslicht) vorteilhaft der Energieverbrauch gesenkt werden bei gleichzeitiger Steigerung der Sichtbarkeit.

Bevorzugt erfolgt die Ermittlung der Vielzahl von Sichtbarkeitsgrößen derart, dass diese jeweils, insbesondere paarweise voneinander, verschiedenen Lichtfunktionen zugeordnet sind. Bevorzugt werden die Sichtbarkeitsgrößen der Vielzahl von (ermittelten) auf Grundlage wenigstens teilweise verschiedener aus den (insbesondere erfassten) erzeugten Umfelddaten ausgewählter Daten oder hiervon abgeleiteter Daten ermittelt. Insbesondere wird in Abhängigkeit der jeweils zu steuernden Lichtfunktion (etwa Tagfahrlicht, Abblendlicht und/oder Schlusslicht) eine jeweils dieser Lichtfunktion vorgegebene Auswahl aus den erfassten Umfelddaten zur Ermittlung der Sichtbarkeitsgröße verwendet.

Die jeweils vorgegebene Auswahl könnte beispielsweise einen von der jeweils zu steuernden Lichtfunktion abhängigen, insbesondere hierfür vorgegebenen und/oder vorgebbaren, räumlichen Bereich des Fahrzeugumfelds wiederspiegeln und/oder abbilden oder hierfür charakteristisch sein.

Zusätzlich oder alternativ könnten auch in Abhängigkeit der jeweiligen Lichtfunktion (verschiedene) Werte für wenigstens eine Umgebungsbedingung und/oder wenigstens eine Lichtbedingung und/oder wenigstens eine Sichtbedingung (wie beispielsweise Licht- und/oder Kontrast- und/oder Helligkeitsverhältnisse) oder hierfür charakteristischen Größen, welche bevorzugt mit aus den Umfelddaten ermittelten und/oder ermittelbaren Werten für die wenigstens eine Umgebungsbedingung und/oder für die wenigstens eine Lichtbedingung und/oder für die wenigstens eine Sichtbedingung (also beispielsweise Licht- und/oder Kontrast- und/oder Helligkeitsverhältnissen) verglichen werden, oder hierfür charakteristische Größen vorgegeben und/oder vorgebbar sein und bevorzugt (insbesondere auf einer fahrzeuggebundenen Speichereinrichtung) abgelegt sein.

Die vorliegende Erfindung ist weiterhin gerichtet auf ein, insbesondere Computer-implementiertes, Verfahren, bevorzugt zur Verwendung von künstlicher Intelligenz und/oder zur Erzeugung eines (trainierten) Sichtbarkeits-Modells maschinellen Lernens zur Ermittlung wenigstens einer Sichtbarkeitsgröße, welche zur Verwendung zur (bzw. in der) automatischen Steuerung wenigstens einer Lichtfunktion einer Beleuchtungseinrichtung, insbesondere eines Tagfahrlichts und/oder eines Schlusslichts und/oder eines Abblendlichts, eines Ego-Fahrzeugs (insbesondere in Abhängigkeit eines Sichtverhältnisses) geeignet und bestimmt ist, umfassend:
- Bereitstellen eines trainierbaren Sichtbarkeits-Modells maschinellen Lernens, welches einen Satz trainierbarer Parameter umfasst und welches auf Grundlage von Umfelddaten, welche für ein Sichtverhältnis in einem (bzw. dem) Umfeld des Ego-Fahrzeugs charakteristisch sind, oder hiervon abgeleiteter Daten als Eingangsgrößen wenigstens eine Sichtbarkeitsgröße für das Ego-Fahrzeug als Ausgangsgröße erzeugt;
- Erzeugen eines Trainingsdatensatzes von Trainings-Umfelddaten in Bezug auf eine Vielzahl verschiedener Sichtverhältnisse in Bezug auf wenigstens ein Ego-Fahrzeug, bevorzugt in Bezug auf eine Vielzahl (verschiedener) Ego-Fahrzeuge, wobei die Trainings-Umfelddaten Umfelddaten in Bezug auf ein Ego-Fahrzeug aus wenigstens drei, bevorzugt wenigstens vier, bevorzugt wenigstens fünf verschiedenartigen Sensoreinrichtungen umfassen. Dabei werden bevorzugt die verschiedenartigen Sensoreinrichtungen (jeweils) ausgewählt aus der obig angegebenen Gruppe von Sensoreinrichtungen. Bevorzugt können die Umfelddaten in einer wie obig im Rahmen des Verfahrens zur automatischen Steuerung wenigstens einer Lichtfunktion beschriebenen Ermittlung und/oder Erfassung und/oder Erzeugung ermittelt und/oder erfasst und/oder erzeugt und zur Erzeugung eines Trainingsdatensatzes verwendet werden.
- Trainieren des (trainieren) Sichtbarkeits-Modells auf Grundlage des Trainingsdatensatzes.

Bevorzugt umfasst der Trainingsdatensatz fahrzeugrelevante Daten des (jeweils verwendeten) Ego-Fahrzeugs, wie beispielsweise eine Farbe des Ego-Fahrzeugs, geometrische Abmessungen, wie eine Länge und/oder eine Breite und/oder eine Höhe, des Ego-Fahrzeugs.

Bevorzugt umfasst der Trainingsdatensatz Informationen in Bezug auf die jeweils vorherrschenden (und von den Umfelddaten wenigstens teilweise abgebildeten) Umgebungsbedingung(en) und/oder Lichtbedingung(en) und/oder Sichtbedingung(en) und/oder das jeweils (in Bezug auf die jeweiligen Umfelddaten) vorherrschende Sichtverhältnis.

Bevorzugt basiert das trainierbare Sichtbarkeits-Modell maschinellen Lernens auf einem (künstlichen) neuronalen Netzwerk. Ein solches neuronales Netzwerk kann beispielsweise als tiefes neuronales Netzwerk (Deep Neural Network, DNN) und/oder ein sogenanntes Convolutional Neural Network (CNN) (dt. Faltungsnetzwerk) und/oder ein rekurrentes Neuronales Netzwerk (RNN, engl. Recurrent Neural Network) ausgestaltet sein.

Bevorzugt umfasst der Trainingsdatensatz Umfelddaten, welche charakteristisch sind für aus ortsaufgelösten Roh-Umfelddaten (durch Objektklassifizierung) erkannte Objekte.

Denkbar ist aber auch, dass der Trainingsdatensatz ortsaufgelöste Roh-Umfelddaten in Bezug auf ein Fahrzeugumfeld umfasst, welche von einer Sensoreinrichtung erzeugt wurden, und das (trainierbare) Sichtbarkeits-Modell zur Erkennung von Objekten geeignet ist und/oder daraufhin trainiert wird.

Bevorzugt erfolgt eine Evaluation des trainierten Sichtbarkeits-Modells maschinellen Lernens, indem eine mittels des trainierten Sichtbarkeits-Modells maschinellen Lernens auf Grundlage von erfassten Umfelddaten, welche für ein Sichtverhältnis in dem Umfeld des Ego-Fahrzeugs charakteristisch sind, ermittelte Sichtbarkeitsgröße, welche für die Sichtbarkeit des Ego-Fahrzeugs für einen weiteren Verkehrsteilnehmer wie ein Umfeld-Fahrzeug charakteristisch ist, durch eine Ermittlung einer weiteren Sichtbarkeitsgröße, welche für die Sichtbarkeit des Ego-Fahrzeugs für den weiteren Verkehrsteilnehmer charakteristisch ist.

Bevorzugt basiert die Ermittlung der weiteren Sichtbarkeitsgröße auf Umfelddaten, in welchen das Ego-Fahrzeug (insbesondere wenigstens teilweise und bevorzugt direkt aus der Perspektive bzw. entlang der Aufnahmerichtung wenigstens einer Sensoreinrichtung des weiteren Verkehrsteilnehmers wie dem Umfeld-Fahrzeug) wenigstens bereichsweise und bevorzugt aus wenigstens einer Aufnahmerichtung gesehen vollständig abgebildet und/oder erfasst ist. Bevorzugt wurden diese Umfelddaten durch eine Sensoreinrichtung des weiteren Verkehrsteilnehmers, wie des Umfeld-Fahrzeugs, erzeugt.

Denkbar ist auch, dass Nutzerdaten in Bezug auf ein Nutzerverhalten zur manuellen Steuerung wenigstens einer Lichtfunktion der Beleuchtungseinrichtung des Fahrzeugs, bevorzugt in Abhängigkeit von erfassten Größen, welche charakteristisch sind für eine Umgebungsbedingung und/oder eine Lichtbedingung und/oder eine Sichtbedingung sind, erfasst und derart erfasste Nutzerdaten in den Trainingsdatensatz mitaufgenommen werden.

Die vorliegende Erfindung ist weiterhin gerichtet auf eine Steuervorrichtung für eine Beleuchtungseinrichtung eines Ego-Fahrzeugs zur, insbesondere automatischen, Steuerung wenigstens einer Lichtfunktion der Beleuchtungseinrichtung, insbesondere eines Tagfahrlichts und/oder eines Schlusslichts und/oder eines Abblendlichts, des Ego-Fahrzeugs (insbesondere in Abhängigkeit eines Sichtverhältnisses).

Dabei ist die Steuervorrichtung dazu geeignet und/oder bestimmt sowie/oder konfiguriert, Umfelddaten, welche für ein Sichtverhältnis in einem (bzw. dem) Umfeld des Ego-Fahrzeugs (auch als Fahrzeugumfeld bezeichnet) charakteristisch sind, zu erfassen, insbesondere abzurufen und/oder zu empfangen.

Erfindungsgemäß ist die Steuervorrichtung dazu geeignet und/oder bestimmt sowie/oder konfiguriert, auf Grundlage der erfassten Umfelddaten wenigstens eine Sichtbarkeitsgröße, welche für eine Sichtbarkeit des Ego-Fahrzeugs für wenigstens einen weiteren Verkehrsteilnehmer charakteristisch ist, zur Steuerung der wenigstens einen Lichtfunktion der Beleuchtungseinrichtung des Ego-Fahrzeugs zu ermitteln.

Es wird also auch im Rahmen der erfindungsgemäßen vorgeschlagen, dass eine an das Sichtverhältnis in dem Umfeld des Ego-Fahrzeugs angepasste bzw. hiervon (mittelbar über die erfassten Umfelddaten) abhängige Sichtbarkeitsgröße ermittelt und insbesondere prognostiziert wird, welche wiederum zur Steuerung der Lichtfunktion(en) der Beleuchtungseinrichtung verwendet wird.

Bevorzugt ist die Steuervorrichtung dazu eingerichtet, geeignet und/oder bestimmt, das obig beschriebene Verfahren zur automatischen Steuerung (wenigstens) einer Lichtfunktion einer Beleuchtungseinrichtung eines Ego-Fahrzeugs sowie alle bereits obig im Zusammenhang mit dem Verfahren beschriebene Verfahrensschritte einzeln oder in Kombination miteinander auszuführen. Umgekehrt kann das Verfahren mit allen im Rahmen der Steuervorrichtung beschriebenen Merkmalen einzeln oder in Kombination miteinander ausgestattet sein.

Die vorliegende Erfindung ist weiterhin gerichtet auf ein Fahrzeug, insbesondere Kraftfahrzeug, umfassend eine obig beschriebene Steuervorrichtung entsprechend einer Ausführungsform.

Bevorzugt handelt es sich bei der Steuervorrichtung um einen (festen, insbesondere einen nicht zerstörungsfrei lösbaren) Bestandteil des Fahrzeugs.

Bevorzugt handelt es sich bei dem Fahrzeug um eine Einrichtung (Fahrzeug) aus dem Transportsektor. Bei dem Fahrzeug kann es sich insbesondere um ein (motorisiertes) Straßenfahrzeug handeln. Darüber hinaus kann es sich bei dem Fahrzeug neben einem Straßenfahrzeug auch um ein Flugtaxi, ein Flugzeug und ein anderes Fortbewegungsmittel oder eine andere Fahrzeugart handeln, beispielsweise ein Luft-, Wasser- oder Schienenfahrzeug.

Bei einem Fahrzeug kann es sich um ein Kraftfahrzeug handeln, welches insbesondere ein von dem Fahrer selbst gesteuertes Kraftfahrzeug ("Driver only"), ein halbautonomes, autonomes (beispielsweise der Autonomiestufe Level 3 oder 4 oder 5 (der Norm SAE J3016)) oder selbstfahrendes Kraftfahrzeug ist. Die Autonomiestufe Level 5 bezeichnet dabei vollautomatisch fahrende Fahrzeuge. Ebenso kann es sich bei dem Fahrzeug um ein fahrerloses Transportsystem handeln. Das Fahrzeug kann dabei von einem Fahrer gesteuert werden oder autonom fahren. Darüber hinaus kann es sich bei dem Fahrzeug neben einem Straßenfahrzeug auch um ein Flugtaxi, ein Flugzeug und ein anderes Fortbewegungsmittel oder eine andere Fahrzeugart handeln, beispielsweise ein Luft-, Wasser- oder Schienenfahrzeug.

Die vorliegende Erfindung ist weiterhin gerichtet auf einen Datenspeicher, bevorzugt einen externen Server, insbesondere ein Backend. Bevorzugt ist der Datenspeicher, bevorzugt der externe Server dazu geeignet und bestimmt, die im Rahmen des obig beschriebenen Verfahren zur automatischen Steuerung wenigstens einer Lichtfunktion und/oder die im Rahmen des obig beschriebenen Verfahren zur Erzeugung eines trainierten Sichtbarkeits-Modells maschinellen Lernens beschriebenen Verfahrensschritte (bzw. der gesamten Verfahren oder bevorzugter Ausführungsformen dieser) sowie bevorzugte Ausführungsformen auszuführen.

Die vorliegende Erfindung ist weiterhin gerichtet auf ein Computerprogramm oder Computerprogrammprodukt, umfassend Programmmittel, insbesondere einen Programmcode, welcher zumindest einzelne oder mehrere Verfahrensschritte der erfindungsgemäßen Verfahren einzeln oder in Kombination miteinander und bevorzugt eine der beschriebenen bevorzugten Ausführungsformen repräsentiert oder kodiert und zum Ausführen durch eine Prozessoreinrichtung ausgebildet ist.

Die vorliegende Erfindung ist weiterhin gerichtet auf ein Datenträgersignal bzw. maschinenlesbares (Steuer-)Signal, bei welchem es sich bevorzugt um das obig beschriebene (erzeugte) Steuersignal handelt und/oder welches bevorzugt charakteristisch ist für wenigstens eine (entsprechend eines obig beschriebenen Verfahrens oder einer bevorzugten Ausführungsform ermittelte) Sichtbarkeitsgröße.

Die vorliegende Erfindung ist weiterhin gerichtet auf eine nichtflüchtige Speichereinrichtung, insbesondere einen Datenspeicher, auf welchem zumindest eine Ausführungsform des erfindungsgemäßen Computerprogramms oder einer bevorzugten Ausführungsform des Computerprogramms gespeichert ist.

Die vorliegende Erfindung wurde in Bezug auf ein (Ego-)Fahrzeug beschrieben. Dabei ist die vorliegende Erfindung auch übertragbar allgemein auf den Transportsektor und/oder auch übertragbar auf eine stationäre (Signal-)Beleuchtung insbesondere im Verkehrsumfeld. Die Anmelderin behält sich vor, hierauf gerichtete Gegenstände ebenfalls zu beanspruchen.

Weitere Vorteile und Ausführungsformen ergeben sich aus den beigefügten Zeichnungen:
Darin zeigen:
- Fig. 1: eine schematische Darstellung eines Fahrzeugs gemäß der vorliegenden Erfindung gemäß einer Ausführungsform;
- Fig. 2: ein Wirkdiagramm des erfindungsgemäßen Verfahrens gemäß einer Ausführungsform; und
- Fig. 3 und 4: zeigen zwei Ansichten einer Veranschaulichung eines erfindungsgemäßen Verfahrens gemäß einer weiteren Ausführungsform.

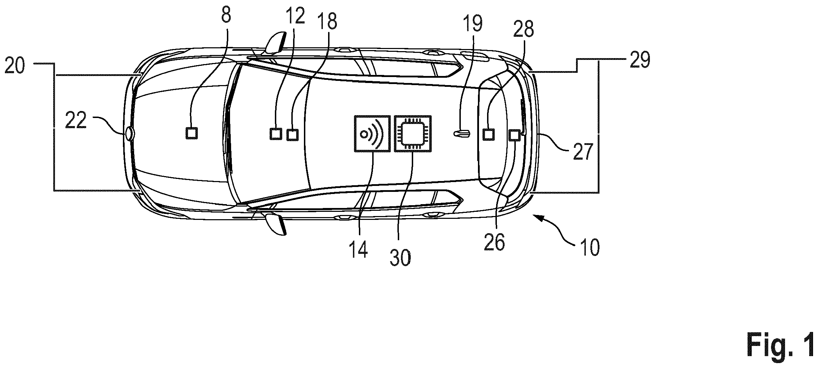

Figur 1 zeigt eine schematische Darstellung eines Fahrzeugs 10, insbesondere Systemkomponenten am Fahrzeug 10, und die für die Anwendung der erfindungsgemäßen Verfahren gemäß einer Ausführungsform relevanten bzw. bevorzugten Bauteile des Fahrzeugs 10.

Dabei umfasst die Beleuchtungseinrichtung des Fahrzeug 10 auf der Vorderseite ein Scheinwerferpaar 20 und auf der Rückseite ein SBBR-Paar 29. Bei dem Scheinwerferpaar 20 handelt es sich typischerweise um ein Abblendlicht und zusätzlich zu diesem kann die Beleuchtungseinrichtung an der Vorderseite des Fahrzeugs 10 weitere Schweinwerfer, beispielsweise für ein Fernlicht, ein Standlicht, ein Tagfahrlicht, ein Kurvenlicht, Nebelscheinwerfer und dergleichen aufweisen (hier nicht dargestellt). Unter einem SBBR-Paar 29 wird insbesondere eine kombinierte Leuchte verstanden, welche in der Lage ist, die Funktionen eines Standlichtes, eines Bremslichtes, eines Blinklichtes und einer Rückfahrlichtes auszuführen. Zusätzlich zu dem SBBR-Paar kann eine Nebelschlussleuchte vorhanden sein (hier nicht dargestellt).

Im Bereich der Frontscheibe des Fahrzeugs 10, sind hier ein Regen-/Lichtsensor 18 und eine Frontkamera 12 angeordnet (jeweils nur schematisch dargestellt). Das Fahrzeug 10 kann über zusätzliche Sensoreinrichtungen verfügen, beispielsweise über einen Radar-, Ultraschall- und/oder LIDAR-Sensor, welche hier durch das Bezugszeichen 22 als Front-Sensorik gekennzeichnet schematisch gekennzeichnet sind.

Weiterhin weist das Fahrzeug bevorzugt einen insbesondere rückwärtigen Lichtsensor 26 bzw. Lichtsensor im Heckbereich, sowie weitere Heck-Sensorik 27 (wie beispielsweise Radar-, Ultraschall- und/oder Lidar-Sensor). Weiter bevorzugt umfasst das Fahrzeug eine (hochgesetzte und/oder weitere) Bremsleuchte und/oder Signalleuchte 28.

Bevorzugt wird die optische Sensorik (Kameras) und/oder der Regen-/Lichtsensor und/oder der Radar-Sensor und/oder Ultraschall-Sensor und/oder LIDAR-Sensor (als Datenquelle) zur Erhebung und/oder zur Aufnahme und/oder zur Ermittlung von Daten für Licht- und/oder Sichtverhältnisse verwendet.

Das Fahrzeug 10 umfasst bevorzugt Einrichtungen zur Ermittlung standortbezogener Wetterdaten, wie beispielsweise über einen Online-Wetterdienst (wie GPS oder dergleichen und/oder ein Mobilfunknetz) und/oder DAB+ und weist hierfür bevorzugt Antennen 19 für DAB+/Radio und mobile Onlinedienste auf.

Das Fahrzeug 10 umfasst weiterhin bevorzugt eine Kommunikationsschnittstelle 14 einer Kommunikationseinrichtung (z.B. Car2X) für das Empfangen und Senden von Daten, bevorzugt zum Austausch von Informationen zur gegenseitigen Sichtbarkeit mit anderen Verkehrsteilnehmern. So können beispielsweise über Car2X Informationen zum Lichtstatus und zur Güte der Sichtbarkeit einholt und/oder ausgetauscht werden.

Das Fahrzeug 10 umfasst bevorzugt ein GPS-Modul - insbesondere als Fahrzeugpositionssensor - , eine Künstliche Intelligenz 30 und eine Steuereinrichtung 8 zur Ausführung und/oder Durchführung der automatischen Steuerung (der Lichtfunktionen der) Beleuchtungseinrichtung des Fahrzeugs (wie beispielsweise eines Tagfahrlichtes und/oder eines Schlusslichtes und/oder eines Abblendlichtes). Die künstliche Intelligenz 30 repräsentiert hier insbesondere alle für das Ausführen der erfindungsgemäßen Verfahren nötigen Computerprogramme, Algorithmen, Programmcodes und die dazugehörigen Bestandteile der dafür notwendigen Hardware (Prozessoreinrichtung, Datenspeicher und dergleichen), insbesondere zur Klassifizierung von Sichtverhältnissen, der eigenen Sichtbarkeit und der von anderen Verkehrsteilnehmern sowie zur selbständigen Steuerung von Schlusslichtfunktionen (auf Fahrzeug ECU 30 oder in Cloud Backend 7).

Bevorzugt ist die Künstliche Intelligenz zur Erkennung von Objekten und/oder Objektklassen in den aufgenommenen ortsaufgelösten Bildern und insbesondere für die Auswertung der Umfelddaten, die Ermittlung der Sichtbarkeitsgröße und/oder der Erzeugung von Datensätzen, die Ermittlung von Steuergrößen und dergleichen geeignet und bestimmt bzw. konfiguriert. Hierbei ist es denkbar, dass die genannten Aufgaben durch mehr als eine Künstliche Intelligenz ausgeführt werden.

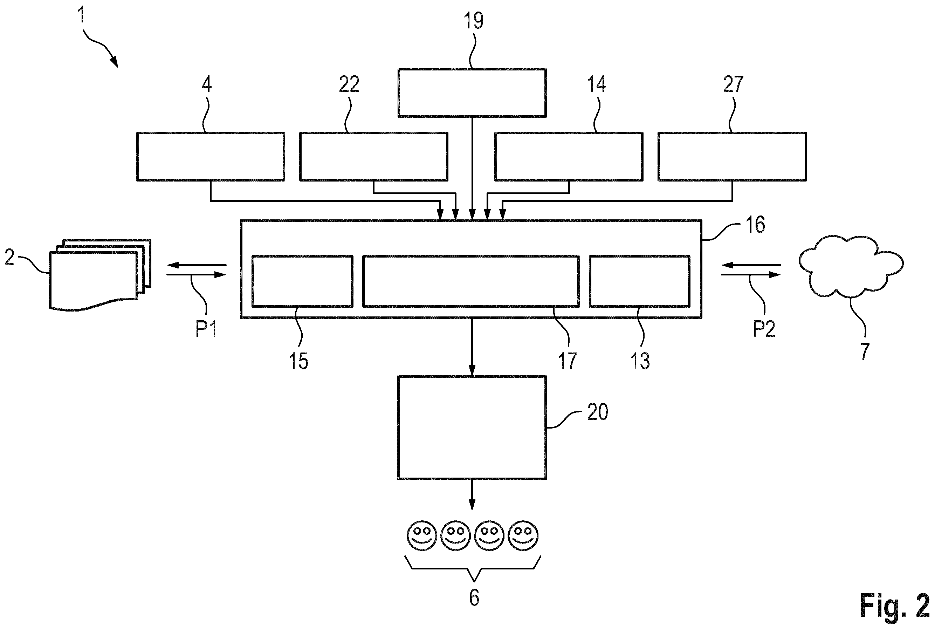

Figur 2 zeigt ein Wirkdiagramm 1 der erfindungsgemäßen Verfahren gemäß einer Ausführungsform. Im Mittelpunkt der Anwendung der erfindungsgemäßen Verfahren steht ein Steuergerät mit einer künstlichen Intelligenz (ECU^{KI}, electronic control unit) 16.

Die ECU^{KI} 16 erfasst bevorzugt im Verfahren zur Automatischen Steuerung wenigstens einer Lichtfunktion einer Beleuchtungseinrichtung die Umfelddaten Daten eines GPS-Moduls 4 (GPS-Signal), einer Front-Sensorik 22 (wie Lichtsensors 5, einer Frontkamera 12, Regen-/LichtSensor, Ultraschall-Sensor, LIDAR-Sensor) einer Heck-Sensorik 27 (Heck-Radar-Sensor, Ultraschallsensor, Heckkamera, LIDAR-Sensor und dergleichen), und empfängt und/oder sendet Daten und/oder Signale über eine Kommunikationsschnittstelle 14 (Car2X Empfänger/Sender). Weiterhin kann die ECU^{KI} 16 Daten wie beispielsweise Wetterdaten über Onlinedienste oder DAB+ (gekennzeichnet durch Bezugszeichen 19) abrufen.

Vorgeschlagen wird insbesondere, dass an bedeckten Tagen mit schlechten Lichtverhältnissen oder anderen Kontrast mindernden/Sichtweiten reduzierenden Wettereinflüssen bevorzugt zusätzlich zum Tagfahrlicht das Schlusslicht oder unabhängig vom Schlusslicht das Abblendlicht des Fahrzeugs 10 (insbesondere automatisch) aktiviert und/oder eingeschaltet wird.

Dabei erfolgt die Schaltung bevorzugt nicht über den Regen-/Lichtsensor, sondern durch eine Künstliche Intelligenz ECU^{KI} 16 (bevorzugt durch eine auf einer Künstlichen Intelligenz ECU^{KI} bzw. auf einem Modell maschinellen Lernens basierenden Steuervorrichtung) insbesondere in einer Fusion unterschiedlicher Daten aus verschiedenen Quellen, wie z.B. Informationen über die Erkennbarkeit des eigenen Fahrzeugs durch andere Verkehrsteilnehmer 6 (z.B. Car2X), standortgenaue Wetterdaten, Messung der Licht- und Kontrastverhältnisse über eigene Sensorik (z.B. Kamera, Regen-/Lichtsensor, usw.) oder Sensoren anderer Verkehrsteilnehmer 6 oder im Verkehrsraum. In Fig. 2 kennzeichnet das Bezugszeichen 15 eine beispielhafte Sensor/Daten-Fusion. Bevorzugt dient als Grundlage für die Sichtbarkeit bzw. den Grad der Sichtbarkeit eines Objektes (z.B. vorausfahrendes Fahrzeug) unter entsprechenden Licht- und Sichtverhältnissen ein Modell der menschlichen visuellen Wahrnehmung.

Reicht die Umgebungsbeleuchtung noch aus, so dass der Fahrer noch ausreichend sieht und/oder das Fahrzeug von vorne noch über das Tagfahrlicht ausreichend gesehen wird, kann auf das Einschalten des Abblendlichts verzichtet werden.

In einer anderen Funktionsvariante kann das Abblendlicht unabhängig vom Schlusslicht eingeschaltet werden. In diesen Fällen werden die Funktionen unabhängig voneinander geschaltet, wodurch im Vergleich zum Einschalten der gesamten Beleuchtung (Abblendlicht und Schlusslicht) der Energieverbrauch gesenkt wird. Weiterhin wird die Sichtbarkeit gesteigert.

Das Bezugszeichen 17 kennzeichnet eine KI-Bewertung, beispielsweise der Sichtverhältnisse. Dabei kann es sich bei den Sichtverhältnissen um eine eigene Sichtbarkeit und/oder der anderen Verkehrsteilnehmer handeln. Das Bezugszeichen 13 kennzeichnet eine Helligkeitsregelung, welche insbesondere durch die ECU^{KI} (insbesondere auf Grundlage der Kl-Bewertung 17) ermittelt wird. Aus der ermittelten Helligkeitsregelung resultiert bevorzugt eine Steuerung und/oder Regelung der Scheinwerfer- und/oder Leuchtenpaare 20. Hierdurch verändert sich die Sichtbarkeit des Fahrzeugs gegenüber anderen VerkehrsteilnehmerInnen 6.

Das Einschalten der Scheinwerfer und/oder Rückleuchten SBBR (Paar) 20 erfolgt bevorzugt im Rahmen des Lernprozesses (Verfahren zum zur Erzeugung eiens trainierten Sichtbarkeits-Modells maschinellen Lernens) und im Rahmen des Verfahrens zur automatischen Steuerung der wenigstens einen Lichtfunktion durch die ECU^{KI} 16.

Aus dem abgelegten (Fahrzeug-)Datensatz 2 und/oder einer Vielzahl an abgelegten Datensätzen 2 erzeugt die ECU^{KI} 16 wenigstens eine Sichtbarkeitsgröße, welche beispielsweise in einer nichtflüchtigen Speichereinrichtung 7, insbesondere einer Cloud/einem Backend abgelegt werden und dem Fahrzeug und insbesondere einer Vielzahl von Fahrzeugen bereitgestellt werden kann. Daneben können in der Cloud/in dem Backend Umfelddaten (wie Kartendaten und/oder Wetterdaten und/oder Sensordaten weiterer Verkehrsteilnehmer und/oder stationärer Infrastruktureinrichtungen) abgelegt sein, welche von der ECU^{KI} 16 zur Ermittlung der wenigstens einen Sichtbarkeitsgröße abgerufen und bevorzugt verwendet werden. Der Doppelpfeil P2 drückt dabei aus, dass die ECU^{KI} ebenfalls Umfelddaten (etwa von dem Ego-Fahrzeug 10 erzeugt) und/oder ermittelte Sichtbarkeitsgröße zum Ablegen auf der externen Speichereinrichtung 7, etwa realisiert durch eine Cloud/ein Backend, übermitteln kann.

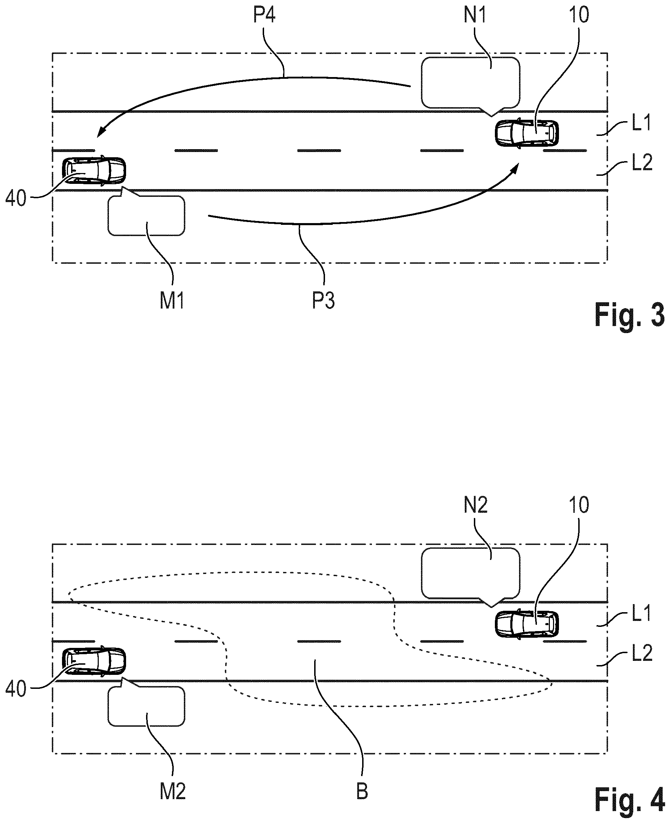

Fig. 3 und 4 zeigen zwei Ansichten einer Veranschaulichung eines erfindungsgemäßen Verfahrens gemäß einer weiteren Ausführungsform einer nacheinander stattfindenden Verkehrssituation auf einer Fahrbahn mit zwei Fahrspuren L1, L2 jeweils aus Sicht der Vogelperspektive (sogenannte "Bird's eye view"). Dabei sind die beiden Fahrspuren L1 und L2 für Fahrtrichtungen in entgegengesetzte Richtungen vorgesehen.

Das (Ego-)Fahrzeug 10 befindet sich in den Figuren 3 und 4 jeweils auf der Fahrspur L1. In entgegengesetzter Fahrtrichtung bewegt sich das (Umfeld-)Fahrzeug 40 bzw. ein weiterer Verkehrsteilnehmer auf der Fahrspur L2.

Dabei liegt in der zuerst stattfindenden Ansicht der Fig. 3 bei dem Fahrzeug 10 eine, insbesondere wahrnehmungsbasierte, Bewertung der (gegenwärtigen) Sichtbarkeit als "gut" vor. Demzufolge liegt bei dem Fahrzeug 10 ein Beleuchtungszustand (des Fahrzeugs 10) vor, in welchem die Scheinwerfer deaktiviert sind.

Das dem Fahrzeug 10 auf der Gegenspur L2 entgegenkommende Fahrzeug 40 der in Fig. 3 dargestellten Verkehrssituation erfasst das (aus Sicht des Fahrzeugs 40 ihm entgegenkommende) (Ego-)Fahrzeug 10 auf der Spur L1 und nimmt eine Beurteilung bzw. Bewertung der, insbesondere wahrnehmungsbasierten, Sichtbarkeit des Fahrzeugs 10 vor. In dem in Fig. 3 gezeigten Beispiel kommt das Fahrzeug 40 zu der Bewertung, dass eine schlechte (insbesondere wahrnehmungsbasierte) Sichtbarkeit des Fahrzeugs 10 vorliegt. Insbesondere kommt das Fahrzeug 40 auf Grundlage der bewerteten Sichtbarkeit des Fahrzeugs 10 zu der Beurteilung des Beleuchtungszustands (des Fahrzeugs 10), dass die Schweinwerfer aktiviert werden sollten (zur Verbesserung der Sichtbarkeit des Fahrzeugs 10 insbesondere für weitere Verkehrsteilnehmer).

Auf Grundlage dieser Beurteilung übermittelt (siehe Pfeil P3) bevorzugt das (Umfeld-)Fahrzeug 40 eine Nachricht M1 an das (Ego-)Fahrzeug 10 mit beispielsweise dem Inhalt "I can't see you very well.. (engl. für "Ich kann Sie nicht sehr gut sehen"), mit welchem die als schlecht beurteilte Sichtbarkeit des Fahrzeugs 10 für das Fahrzeug 40 ausgedrückt wird.

Bevorzugt bestätigt das (Ego-)Fahrzeug 10 den Erhalt der Nachricht M1, beispielsweise durch Übermitteln (siehe Pfeil P4) einer Nachricht N1 an das Fahrzeug 40 mit dem beispielhaften Inhalt "Thanks! I will turn on my head lights" (engl. für "Danke, ich werde meine Scheinwerfer anschalten").

Das (Ego-)Fahrzeug 10 schaltet daraufhin seine Scheinwerfer an, was durch den durch den strichlierten Bereich B zur Kennzeichnung eines Ausleuchtungsbereich der Fahrbahn durch die aktivierten Scheinwerfer in Fig. 4 veranschaulicht ist.

Das (Umfeld-)Fahrzeug 40 kann in Bezug auf die neue Situation mit aktivierten Scheinwerfern des (Ego-)Fahrzeugs 10 eine erneute Beurteilung der Sichtbarkeit (engl. "visibility") des Fahrzeugs 10 vornehmen. Kommt das Fahrzeug 40 zu der Beurteilung, dass nun die Sichtbarkeit gut ist, kann es eine Mitteilung M2 an das (Ego-)Fahrzeug 10 mit dem Inhalt "Visibility is good now" (engl. für "Sichtbarkeit ist nun gut") übermitteln.

Das (Ego-)Fahrzeug 10 kann den Erhalt dieser Nachricht bzw. Mitteilung M2 durch Übermitteln einer (Antwort- und/oder Bestätigungs-)Nachricht N2 beispielsweise mit dem Inhalt "See you next time" (engl. für "Bis zum nächsten Mal") an das (Umfeld-)Fahrzeug 40 bestätigen.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Wirkdiagramm
- 2: (Fahrzeug-)Datensatz
- 3: Aufenthaltsort, Lokalisierung
- 4: GPS-Modul
- 5: Lichtsensor
- 6: andere VerkehrsteilnehmerInnen
- 7: nichtflüchtige, externe Speichereinrichtung, Cloud
- 8: Steuereinrichtung
- 10: Fahrzeug
- 12: Frontkamera
- 13: KI-Helligkeitsregelung
- 14: Kommunikationsschnittstelle
- 15: Sensor/Daten Fusion
- 16: Künstliche Intelligenz (KI)
- 17: KI-Bewertung
- 18: Licht-/Regensensor
- 19: Antennen für DAB+/Radio und mobile Online-Dienste
- 20: Scheinwerfer Paar
- 21: KI Lernen von Nutzerverhalten
- 22: Front-Sensorik
- 23: KI Lernen von Umfelddaten
- 24: KI Lernen von anderen Verkehrsteilnehmer
- 25: Anwenden auf bekannte und unbekannte Situationen
- 26: Einschalten Scheinwerfer und Rückleuchten SBBR (Paar)
- 27: Heck-Sensorik
- 29: SBBR Paar
- 30: ECU^{KI} (Electronic Control Unit, Künstliche Intelligenz)
- 40: (Umfeld-)Fahrzeug
- B: Ausleuchtungsbereich
- L1, L2: Fahrspur
- N1, N2, M1, M2: Nachrichten
- P1, P2: Pfeil

## Patentansprüche

1. Verfahren zur, insbesondere automatischen, Steuerung wenigstens einer Lichtfunktion einer Beleuchtungseinrichtung (20), insbesondere eines Tagfahrlichts und/oder eines Schlusslichts und/oder eines Abblendlichts, eines Ego-Fahrzeugs (10) in Abhängigkeit eines Sichtverhältnisses, wobei Umfelddaten, welche für ein Sichtverhältnis in einem Umfeld des Ego-Fahrzeugs (10) charakteristisch sind, erfasst werden,
**dadurch gekennzeichnet, dass**
auf Grundlage der erfassten Umfelddaten wenigstens eine Sichtbarkeitsgröße, welche für eine Sichtbarkeit des Ego-Fahrzeugs (10) für wenigstens einen weiteren Verkehrsteilnehmer (40) charakteristisch ist, zur Steuerung der wenigstens einen Lichtfunktion der Beleuchtungseinrichtung (20) des Ego-Fahrzeugs (10) ermittelt wird.

2. Verfahren nach Anspruch 1, **dadurch gekennzeichnet, dass** die ermittelte Sichtbarkeitsgröße charakteristisch ist für eine Sichtbarkeit des Ego-Fahrzeugs (10) für wenigstens einen Nutzer des einen weiteren Verkehrsteilnehmers (40), wobei insbesondere die Sichtbarkeitsgröße basierend auf einem Modell zur menschlichen visuellen Wahrnehmung ermittelt wird.

3. Verfahren nach einem der vorhergehenden Ansprüche, **dadurch gekennzeichnet, dass** es sich bei der Sichtbarkeitsgröße um eine Prognosegröße handelt und die als Prognosegröße ermittelte Sichtbarkeitsgröße auf Grundlage von durch wenigstens eine Sensoreinrichtung des Ego-Fahrzeugs (10) erfassten Umfelddaten ermittelt wird.

4. Verfahren nach einem der vorhergehenden Ansprüche, **dadurch gekennzeichnet, dass** die als Prognosegröße ermittelte Sichtbarkeitsgröße auf Grundlage von durch wenigstens eine Sensoreinrichtung aus dem Umfeld des Ego-Fahrzeugs (10), bevorzugt durch eine Sensoreinrichtung eines von dem Ego-Fahrzeug (10) verschiedenen Umfeld-Fahrzeugs (40) und/oder einer insbesondere stationären Sensoreinrichtung einer Infrastruktureinrichtung, erfassten Umfelddaten ermittelt wird.

5. Verfahren nach wenigstens einem der vorhergehenden Ansprüche, **dadurch gekennzeichnet, dass** eine in dem Umfeld des Ego-Fahrzeugs (10) befindliche Sensoreinrichtung Umfelddaten zur Erfassung des Ego-Fahrzeugs (10) erzeugt und die Sichtbarkeitsgröße auf Grundlage dieser erzeugten Umfelddaten ermittelt wird.

6. Verfahren nach einem der vorhergehenden Ansprüche, **dadurch gekennzeichnet, dass** zur Ermittlung und/oder zur Bereitstellung der Sichtbarkeitsgröße Umfelddaten und/oder hiervon abgeleitete Daten, wie beispielsweise die auf Grundlage der Umfelddaten ermittelte Sichtbarkeitsgröße, zwischen einem von dem Ego-Fahrzeug (10) verschiedenen Umfeld-Fahrzeug (40) und/oder einer Einrichtung aus dem Umfeld des Ego-Fahrzeugs (10) einerseits und dem Ego-Fahrzeug und/oder einer Steuervorrichtung (8) für eine Beleuchtungseinrichtung (20) des Ego-Fahrzeugs (10) andererseits übermittelt und/oder ausgetauscht werden.

7. Verfahren nach einem der vorhergehenden Ansprüche, **dadurch gekennzeichnet, dass** die Ermittlung der Sichtbarkeitsgröße basierend auf einem trainierten, insbesondere trainierbaren, Sichtbarkeits-Modell maschinellen Lernens zur Klassifizierung von Sichtverhältnissen, insbesondere mittels Ermittlung der Sichtbarkeitsgröße, auf Grundlage der von einer Vielzahl von verschiedenen Sensoreinrichtungen erfassten Umfelddaten erfolgt, wobei das Sichtbarkeits-Modell maschinellen Lernens einen Satz insbesondere trainierbarer, Parameter umfasst, welche auf Werte eingestellt sind, die als Ergebnis eines Trainingsprozesses gelernt wurden.

8. Ein Computer-implementiertes Verfahren zur Erzeugung eines trainierten Sichtbarkeits-Modells maschinellen Lernens zur Ermittlung wenigstens einer Sichtbarkeitsgröße, welche zur Verwendung zur automatischen Steuerung wenigstens einer Lichtfunktion einer Beleuchtungseinrichtung (20) eines Ego-Fahrzeugs (10) in Abhängigkeit eines Sichtverhältnisses geeignet und bestimmt ist, umfassend:
- Bereitstellen eines trainierbaren Sichtbarkeits-Modells maschinellen Lernens, welches einen Satz trainierbarer Parameter umfasst und welches auf Grundlage von Umfelddaten, welche für ein Sichtverhältnis in einem Umfeld des Ego-Fahrzeugs (10) charakteristisch sind, oder hiervon abgeleiteter Daten als Eingangsgrößen wenigstens eine Sichtbarkeitsgröße für das Ego-Fahrzeug (10) als Ausgangsgröße erzeugt;
- Erzeugen eines Trainingsdatensatzes von Trainings-Umfelddaten in Bezug auf eine Vielzahl verschiedener Sichtverhältnisse in Bezug auf wenigstens ein Ego-Fahrzeug (10), wobei die Trainings-Umfelddaten Umfelddaten in Bezug auf ein Ego-Fahrzeug (10) aus wenigstens drei verschiedenartigen Sensoreinrichtungen umfassen;
- Trainieren des Sichtbarkeits-Modells auf Grundlage des Trainingsdatensatzes.

9. Steuervorrichtung (8) für eine Beleuchtungseinrichtung (20) eines Ego-Fahrzeugs (10) zur, insbesondere automatischen, Steuerung wenigstens einer Lichtfunktion der Beleuchtungseinrichtung (20), insbesondere eines Tagfahrlichts und/oder eines Schlusslichts und/oder eines Abblendlichts, des Ego-Fahrzeugs (10) in Abhängigkeit eines Sichtverhältnisses, wobei die Steuervorrichtung (8) dazu geeignet und bestimmt sowie konfiguriert ist, Umfelddaten, welche für ein Sichtverhältnis in einem Umfeld des Ego-Fahrzeugs (10) charakteristisch sind, zu erfassen, insbesondere abzurufen und/oder zu empfangen,
**dadurch gekennzeichnet, dass**
die Steuervorrichtung (8) dazu geeignet und bestimmt sowie konfiguriert ist, auf Grundlage der erfassten Umfelddaten wenigstens eine Sichtbarkeitsgröße, welche für eine Sichtbarkeit des Ego-Fahrzeugs (10) für wenigstens einen weiteren Verkehrsteilnehmer (40) charakteristisch ist, zur Steuerung der wenigstens einen Lichtfunktion der Beleuchtungseinrichtung (20) des Ego-Fahrzeugs (10) zu ermitteln.

10. Fahrzeug (10) umfassend eine Steuervorrichtung (8) nach dem vorhergehenden Anspruch.

11. Verfahren nach einem der vorhergehenden Ansprüche, **dadurch gekennzeichnet, dass** das Abblendlicht des Ego-Fahrzeugs (10) unabhängig von dem Schlusslicht des Ego-Fahrzeugs (10) in Abhängigkeit der wenigstens einen Sichtbarkeitsgröße und bevorzugt in Abhängigkeit einer Vielzahl von ermittelten Sichtbarkeitsgrößen steuerbar ist und/oder gesteuert wird.
